# EUROPÄISCHE PATENTSCHRIFT

(11) **EP 3 169 496 B1**
(45) Veröffentlichungstag und Bekanntmachung des Hinweises auf die Patenterteilung: **19.05.2021**
(21) Anmeldenummer: 14755001.6
(22) Anmeldetag: 15.07.2014
(51) Int. Cl.: B28B 3/00, B30B 11/00, B29C 33/38

(54) **PRESSENANORDNUNG UND VERFAHREN ZUM PRESSEN EINES PRESSTEILS**
PRESS ARRANGEMENT AND METHOD FOR PRESSING PRESSED PARTS
DISPOSITIF DE PRESSE ET PROCÉDÉ POUR PRESSER UNE PIÈCE PRESSÉE

(43) Veröffentlichungstag der Anmeldung: 24.05.2017
(73) Patentinhaber: Dorst Technologies GmbH & Co. KG, 82431 Kochel am See (DE)
(72) Erfinder: HÄRTL, Günter Helmut, 95652 Waldsassen (DE); HÄLTERLEIN, Max, 82407 Wielenbach/Haunshofen (DE)
(74) Vertreter: Meissner Bolte Partnerschaft mbB
(86) Internationale Anmeldenummer: PCT/DE2014/100260
(87) Internationale Veröffentlichungsnummer: WO 2016/008462

(56) Entgegenhaltungen:
- EP-A1- 0 255 719
- EP-A1- 1 380 398
- WO-A1-03/028967
- DE-A1- 3 238 389
- DE-A1- 3 304 576
- FR-A1- 2 404 609
- JP-A- S63 303 698

## Beschreibung

Die Erfindung bezieht sich auf eine Pressenanordnung - insbesondere Behälterpressenanordnung - zum Pressen eines Pressteils, insbesondere eines einen Henkel aufweisenden Behälters aus einem pulver- und/oder granulatförmigen keramischen Pressgut, und auf ein Verfahren zum Pressen eines solchen Pressteils aus einem pulver- und/oder granulatförmigen keramischen Pressgut.

FR 2 404 609 A1 beschreibt ein Verfahren und eine Vorrichtung zur Herstellung von Geschirr und Ähnlichem. In einer Ausführungsform weist die Vorrichtung eine Form, vorzugsweise aus Stahl, auf. Auf dieser Form ist eine Membran aus einem Elastomer aufgebracht.

JP S63 303698 A beschreibt ein Verfahren zum Verdichten eines Pulvers und eine entsprechende Vorrichtung. DE 32 38 389 A1 beschreibt ein Verfahren zur Herstellung von einstückigen Presslingen aus trockenen keramischen Massen und eine entsprechende Vorrichtung.

Verfahren und Pressenwerkzeuge zum isostatischen Pressen eines pulver- und/oder granulatförmigen keramischen Pressguts, wie z.B. offenbart in der WO-A1-03/028967, weisen üblicherweise ein Presswerkzeug mit zwei Pressformkomponenten auf. Im zusammengesetzten Zustand bilden die beiden Pressformkomponenten zwischen sich einen Formraum aus. Auf den Seiten, die dem Formraum zugewandt sind, weisen die Pressformkomponenten jeweils eine Membran auf, welche unterseitig mit einem Druck als Pressdruck beaufschlagbar ist. In den Formraum eingefülltes Pressgut wird durch die Membranen bzw. den unterseitig auf diese einwirkenden Pressdruck zu einem Press- bzw. Formteil zusammengepresst. Problematisch ist das Pressen von Bechern, Tassen oder Schüsseln mit steilwandigen Becherwänden. DE 40 32 316 C1 beschreibt ein Verfahren und eine Vorrichtung zum Herstellen keramischer Hohlkörper mit seitlichem Ansatz als Henkel einer Henkeltasse. In einem ersten Arbeitsgang wird mit zwei Pressformkomponenten in deren Formraum ein becherförmiger Hohlkörper gepresst. Anschließend wird der so gepresste becherförmige Hohlkörper zwischen zwei Stützformen eingesetzt, welche einen seitlichen Wandungsabschnitt des becherförmigen Hohlkörpers freilassen. Dort wird eine zu dieser Seite offene weitere Pressformkomponente angesetzt. Diese weitere Pressformkomponente weist einen Formraum zum Pressen eines Henkels aus einem keramischen Granulat auf, wobei die beiden offenen Henkelansatzbereiche an der seitlichen Umfangswandung des benachbart angeordneten Hohlkörpers anliegen. Beim isostatischen Pressen des Henkels entsteht ein Druck auf dessen Henkelansatzabschnitte, so dass sich der Henkel mit dem becherförmigen Hohlkörper fest verbindet. Es handelt sich somit um eine konstruktiv und verfahrenstechnisch aufwendige Pressanordnung mit zwei eigenständigen Pressstationen zum isostatischen Pressen und mit zusätzlichen Stützkörpern, wobei ein Umsetzen des im nichtgesinterten Zustand empfindlichen Hohlkörpers erforderlich ist.

DE 10 2011 103 745 A1 beschreibt ein Verfahren und ein Presswerkzeug zum isostatischen Pressen steilwandiger Gegenstände aus keramischem Granulat. Das Presswerkzeug ist mit einem mechanischen Ausstoßer versehen, so dass ein gepresster Gegenstand wenigstens teilweise aus einer Kontur eines Oberstempels des Presswerkzeugs herausgeschoben werden kann.

Zum Pressen hintergriffiger Gegenstände, beispielsweise Bechern oder Hohlwaren, beschreibt DE 10 2009 048 882 B4 eine Vorrichtung und ein Verfahren, bei denen eine oberseitige Pressformkomponente einen relativ dazu verstellbaren Stempel aufweist. Dies ermöglicht in einem ersten Arbeitsschritt beim Schließen der beiden Pressformkomponenten nur die oberseitige Membran einzuführen, um nachfolgend den Stempel in diese einzuführen. Durch das Einführen des Stempels wird die Membran quer zur Stempelbewegung seitlich aufgeweitet. Die Membran hat eine breite Wandungsstärke und ist zum Pressen eines hintergriffigen Bechers aufweitbar, wobei die Membran zusammen mit dem Stempel durch eine Formöffnung hindurch nicht in den hintergriffig zu pressenden Raum einführbar wäre. Damit gepresste stärker hintergriffige Pressteile würden sich aus einer Formöffnung der unteren Form jedoch nicht entformen lassen.

DE 43 26 033 C1 betrifft ein Presswerkzeug zum Pressen steilwandiger Hohlkörper.

Die Aufgabe der Erfindung besteht darin, eine Pressenanordnung und ein Pressverfahren zum Pressen eines Pressteils, insbesondere eines insbesondere bauchigen Behälters mit Henkel mit möglichst wenig technischem Aufwand bereitzustellen. Insbesondere soll ein getrenntes Anfertigen von Becherteil und Henkelabschnitt in jeweils eigenen Presszyklen vermieden werden und/oder ein hinterschnittiges Pressteil mit nur einem Pressvorgang fertigbar sein.

Diese Aufgabe wird durch eine Pressenanordnung - insbesondere Behälterpressenanordnung - zum Pressen eines Pressteils aus einem pulver- und/oder granulatförmigen keramischen Pressgut mit den Merkmalen des Patentanspruchs 1 und durch ein Verfahren zum Pressen eines Pressteils aus einem pulver- und/oder granulatförmigen keramischen Pressgut mit den Merkmalen des Patentanspruchs 10 gelöst. Vorteilhafte Ausgestaltungen sind Gegenstand von abhängigen Ansprüchen.

Bevorzugt wird demgemäß eine Pressenanordnung, insbesondere Behälterpressenanordnung, zum Pressen eines Pressteils aus einem pulver- und/oder granulatförmigen keramischen Pressgut.

Die Pressenanordnung weist eine erste Pressformkomponente auf, die eine rückseitig mit Druck als Pressdruck beaufschlagbare Membran aufweist, weist eine zumindest abschnittsweise elastische Außenform auf, die in der ersten Pressformkomponente einsetzbar oder eingesetzt ist, und weist eine zweite Pressformkomponente auf, die als ein Gegenelement zum Ausbilden eines Formraums zwischen einerseits sich oder einer an der zweiten Pressformkomponente angeordneten Innenform und andererseits einem innenseitigen Formabschnitt der Außenform anordbar ist.

Gemäß einer Ausgestaltung ist das Pressteil ein hintergriffiges keramisches Gut. Die Komponenten der Pressenanordnung sind somit zum Formen eines solchen Pressteils konturiert oder konturierbar. Hintergriffig wird dabei insbesondere aus Sicht einer Öffnung der Form bzw. des Formraums gesehen oder aus Sicht einer Aufnahmeöffnung eines so gepressten Pressteils. Unter hintergriffig wird insbesondere verstanden, dass nach dem Pressen in einer Form das Pressteil eine abschnittsweise breitere Geometrie bzw. Kontur hat, wobei ein Abschnitt mit der breiteren Kontur durch eine Öffnung der Form aus der geschlossenen Form nicht entformbar ist. Das so formbare Pressteil ist z.B. eine bauchige Suppentasse, eine Schüssel, ein Topf oder ein Becher. Im Fall technischer Keramik kann es sich z.B. um einen Isolator handeln.

Gemäß einer weiteren besonders bevorzugten Ausgestaltung ist das Pressteil ein Behälter bzw. Hohlkörper, wobei der Behälter zumindest einen seitlichen Ansatz - insbesondere Henkel - aufweist und wobei die Außenform zumindest einen vom Becherformabschnitt als Formabschnitt in die Außenform führenden Formraum zum Ausbilden des zumindest einen seitlichen Ansatzes aufweist. Die Außenform weist somit insbesondere zumindest einen vom Becherformabschnitt in diese hineinführenden Formraum zum Ausbilden des zumindest einen Henkels auf.

Insbesondere wird dabei der Formraum zwischen einerseits der zweiten Pressformkomponente und/oder einer an der zweiten Pressformkomponente angeordneten Innenform und andererseits einem Abschnitt, insbesondere innenseitigen Becherformabschnitt der Außenform ausgebildet.

Eine solche Pressenanordnung ermöglicht ein Pressen eines Bechers mit einem daran ansitzenden Henkel in einem einzigen Presszyklus. Ein separates Herstellen und nachträgliches Befestigen eines Henkels an dem Becher oder ein Anformen eines Henkels in einem separaten zweiten Pressvorgang entfällt.

Unter einem Becher mit einem seitlichen Ansatz bzw. Henkel sind insbesondere auch becherartige Gegenstände wie z.B. Tassen oder Schüsseln zu verstehen, welche einen schüssel- bzw. becherartigen Abschnitt mit daran einem Henkel oder mehreren Henkeln aufweisen. Ein Henkel kann dabei mit seinem oberen und unteren Ende in den Becherformabschnitt übergehen. Ein Henkel kann aber auch mit z.B. nur seinem oberen Ende in den Becherabschnitt übergehen.

Ein Henkel kann nicht nur einen hakenförmigen oder gebogenen Verlauf aufweisen, sondern in einfachster Form auch als nur ein insbesondere geradlinig abstehendes Element als seitlichem Ansatz geformt sein. Zu einem Henkel äquivalent ist insbesondere ein Ausgießer an z.B. einem Becherrand zum Unterstützen eines Ausgießens einer Flüssigkeit aus dem Becher.

Insbesondere ist die Außenform vorteilhaft einteilig mit sowohl dem Formabschnitt bzw. Becherformabschnitt als auch dem Ansatz- bzw. Henkelformabschnitt ausgebildet, so dass ein gleichzeitiges, gemeinsames Pressen von Becher und Henkel aus einem Pulver und/oder Granulat in einem Arbeitsgang erfolgt. Sowohl der Becherformabschnitt als auch der Henkelformabschnitt befinden sich somit bevorzugt in einer einzigen Außenform. Die Außenform ist innenseitig zum Formen der gewünschten Außenseite des Hohlkörpers bzw. Bechers geformt und hat einen seitlichen Wand- bzw. Körperbereich, in welchen der Henkelformabschnitt hineinführt. Eine Ausgestaltung besteht darin, dass die Außenform im eingesetzten Zustand zumindest teilweise an der Membran anliegt, insbesondere ein/der Hohlkörper-Formabschnitt, insbesondere Becherformabschnitt und eine ansatz- oder henkelseitige Außenwand der Außenform außenseitig jeweils zumindest teilweise an der Membran anliegen. Ein auf rückseitig auf die Membran einwirkender Druck als Pressdruck wird dadurch auf die Außenform übertragen und über die Wandung der Außenform weiter auf den innerhalb dieser liegenden Formraum übertragen, in dem sich das zu pressende Pressgut befindet. Insbesondere liegt eine Außenwand des Becherformabschnitts an der Membran der ersten Pressformkomponente an und wird beim Pressen durch diese in Richtung des Formraums gepresst.

Eine weitere Ausgestaltung besteht darin, dass die Pressenanordnung - insbesondere deren zweite Pressenformkomponente - eine Druckleitung aufweist, die zum Anlegen eines Unterdrucks zu einem Aufnahmespalt zwischen der Membran und der darin eingesetzten Außenform führt. Während der Unterdruck anliegt, wird die Außenform in der Membran bzw. in der ersten Pressformkomponente angesaugt bzw. fest gehalten, dies bevorzugt sogar dann, wenn auf die Membran unterseitig gleichzeitig der Druck als insbesondere Pressdruck einwirkt. Der Unterdruck verhindert vorteilhaft auch ein Herausziehen der Außenform aus der Membran oder ein Abheben davon, wenn an dem Formraum z.B. während des Befüllens mit dem Pressgut ein Unterdruck anliegt.

Auch ist es eine Ausgestaltung, dass die Pressenanordnung eine Druckleitung aufweist, die zum Anlegen eines Drucks, insbesondere Unterdrucks zu einer Entlüftungsöffnung zu dem Formraum führt, wobei der Unterdruck unabhängig von dem Unterdruck zwischen Membran und Außenform anlegbar ist. Dieser Unterdruck dient insbesondere dazu, während des Befüllens des Formraums mit dem Pressgut und während des Pressens des Pressguts eine Entlüftung des Formraums zu unterstützen. Dies erfolgt insbesondere über eine eigene Druckleitung unabhängig von einem Unterdruck zum zeitweiligen Fixieren der Außenform in der ersten Pressformkomponente.

Noch eine Ausgestaltung besteht in einer derartigen Pressenanordnung mit einer Druckleitung zum Anlegen eines innenseitigen insbesondere zweiten Drucks als Pressdruck an den zumindest einen Formraum, wobei der innenseitige Druck über eine Membran einwirkt, welche an der zweiten Pressformkomponente und/oder an der Innenform ausgebildet ist. Dadurch kann Druck als insbesondere Pressdruck von beiden Seiten auf den Formraum einwirken. Bei einer unterschiedlichen Steuerbarkeit des außen und des innen am Formraum anliegenden Drucks kann bevorzugt zuerst ein innenseitiger Pressdruck und erst zeitversetzt dazu ein außenseitiger Pressdruck an den Formraum angelegt werden. Prinzipiell können sowohl hinsichtlich zeitlichem Verlauf als auch hinsichtlich Druckverlauf beliebige Druckabfolgen für den außenseitigen Druck, insbesondere Pressdruck relativ zum innenseitigen Druck, insbesondere Pressdruck eingerichtet werden. Insbesondere sind individuell geeignete Einstellungen für unterschiedliche zu pressende Formteile umsetzbar. Berücksichtigbar sind dabei auch ggfs. auftretende zeitliche Abweichungen des verwendeten Pressguts. Eine solche Steuerung kann über eine Steuereinrichtung erfolgen, welche auch für sonstige Komponentenbewegungs- und/oder Pressabläufe an der Pressenanordnung angeschlossen oder darin integriert ist. Auch kann eine Bewegungsstrecke über nur die äußere Membran reduziert werden, wenn auch innenseitig ein Pressdruck auf das Pressgut einwirkt.

Eine erfindungsgemäße Ausgestaltung besteht in einer derartigen Pressenanordnung mit zumindest einer Druckleitung zum Anlegen eines innenseitigen, insbesondere zweiten Drucks an den zumindest einen Formraum, wobei der innenseitige Druck in der Innenform zwischen einer Innenform-Membran und einem Innenformkern anlegbar ist zum Ausbilden eines Innenform-Membranspalts.

Eine Ausgestaltung davon besteht in einer derartigen Pressenanordnung mit einer Volumen- und/oder Drucksteuereinrichtung zum Steuern des Drucks in der Druckleitung zur Innenform, wobei die Volumen-und/oder Drucksteuereinrichtung einen Positions- und/oder Weg- Aufnehmer und einen Drucksensor aufweist und eingerichtet ist, den Druck abhängig von einem Positions- oder Streckenwert als Membran-Vorformdruck und insbesondere abhängig von einem Druckwert als Pressdruck und/oder als Membran-Ansaugdruck zu erzeugen. Beispielsweise kann die Volumen- und/oder Drucksteuereinrichtung dafür eine geeignet programmierte Steuereinrichtung aufweisen, welche eine den Druck bereitstellende Druckzylinderanordnung ansteuert.

Es ist eine Volumen- und/oder Drucksteuereinrichtung vorgesehen, die ausgebildet ist zum Einfüllen eines Volumens in die Innenform abhängig von einem Positions- oder Streckenwert eines Zylinders der Volumen- und/oder Drucksteuereinrichtung zum Ausbilden eines Innenform-Membranspalts. Somit wird insbesondere eine definierte Menge eines Druckmediums, insbesondere Hydrauliköls in die Innenform eingefüllt, um zumindest einen Abschnitt der Innenform-Membran von einem Innenformkern zu beabstanden.

Eine weitere Ausgestaltung besteht in einer derartigen Pressenanordnung mit einer Entformungseinrichtung, die zum seitlichen Aufbiegen der Außenform im Bereich eines in die Außenform hineinführenden Schlitzes ausgestaltet und eingerichtet oder ansteuerbar ist. Dies ermöglicht eine seitliche Entspannung des gepressten Press- bzw. Formteils und zugleich eine Lösung des Pressteils von der Innenform. Insbesondere dann, wenn der Schlitz durch den zumindest einen Henkel führt, wird eine unerwünschte Spannung im Bereich des Henkelansatzes zwischen Henkel und Becherwand verringert oder ganz vermieden.

Vorteilhaft können zum Beispiel in einem oberen außenseitig gerichtet verlaufenden Randbereich eine Struktur, z.B. eine Ausnehmung oder Durchtrittsöffnung ausgebildet sein, in welche z.B. Stifte in der Entformungseinrichtung eingesetzt und dann in seitlicher Richtung bewegt werden.

Außerdem bevorzugt wird ein Verfahren zum Pressen eines Pressteils aus einem pulver- und/oder granulatförmigen keramischen Pressgut, wobei eine zumindest abschnittsweise elastische Außenform in einer unterseitig mit Druck, insbesondere Pressdruck beaufschlagbaren Membran einer ersten Pressformkomponente eingesetzt wird, wobei einerseits eine zweite Pressformkomponente und/oder eine Innenform und andererseits die erste Pressenanordnung mit der Außenform aneinandergesetzt werden, wobei dazwischen ein insbesondere becherbildender Formraum ausgebildet ist oder wird, wobei der zumindest eine Formraum mit dem Pressgut gefüllt wird und wobei das Pressgut durch Anlegen zumindest eines isostatischen Drucks als Pressdruck zu dem Pressteil gepresst wird.

Gemäß einer Ausgestaltung wird als das Pressteil ein hintergriffiges keramisches Gut gepresst. Eine weitere Ausgestaltung besteht darin, dass die Außenform mit zumindest einem von einem Becherformabschnitt in eine Wandung der Außenform zumindest teilweise hineinführenden Formraum zum Ausbilden zumindest eines seitlichen Ansatzes - insbesondere Henkels - verwendet wird und wobei als das Pressteil ein Behälter zusammen mit dem zumindest einen seitlichen Ansatz gepresst wird.

Insbesondere erstreckt sich auch hier der Formraum für den seitlichen Ansatz bzw. Henkel ausgehend von dem Formraum für den Becher in das Material der Außenform hinein.

Es ist eine Ausgestaltung, dass ein gepresstes Pressteil, insbesondere ein gepresster Behälter zusammen mit der geschlossenen gehaltenen Außenform aus der ersten Pressformkomponente entnommen wird. Dadurch wird eine zu starke und unkontrollierte Druckentlastung des Behälters gegenüber einer direkten Entnahme des Pressteils, insbesondere Hohlkörpers bzw. Behälters aus der noch in der Pressformkomponente eingesetzten Außenform vermieden.

Eine Ausgestaltung besteht darin, dass während des Entnehmens aus der ersten Pressformkomponente die/eine Innenform noch im Formteil, insbesondere Behälter eingesetzt bleibt. Insbesondere kann gemäß einer Weiterbildung die Innenform im Behälter eingesetzt bleiben, bis die Außenform geöffnet wurde, um einen innenseitigen Druck auf die Behälterwand zu erhalten. Optional kann während des Entnehmens der Außenform aus der Pressenanordnung ein innenseitiger Druck - z.B. Über- oder Unterdruck - an der Innenform anliegen.

Auch ist es eine Ausgestaltung, dass zum Entnehmen des gepressten Pressteils, insbesondere Behälters die Außenform erst durch Aufweiten eines Schlitzes geöffnet wird und nachfolgend das Pressteil aus der Außenform entnommen wird. Dadurch erfolgt zuerst eine seitliche Druckentlastung des Becherabschnitts des Pressteils bzw. Behälters. Das nachfolgende Entnehmen des Pressteils kann insbesondere nach oben aus der Außenform heraus erfolgen. Je kürzer der Schlitz ist, desto kürzer ist auch eine Pressnaht an einem später gepressten Pressteil, so dass nur ein kürzerer Nahtabschnitt zu verputzen ist - sofern es nicht belassen wird.

Eine weitere Ausgestaltung besteht darin, dass zumindest während eines Teils eines Presszyklus ein an der Membran oder der Außenform anliegender Druck, insbesondere Pressdruck zumindest zeitweilig mit unterschiedlichem Druckwert zu einem an einer Innenform anliegenden Druck, insbesondere Pressdruck an den zumindest einen Formraum angelegt wird. Vorteilhaft bewirkt dies, dass eine Rissbildung am Henkelansatz vermieden wird. Außerdem kann eine gleichmäßigere Verdichtung bzw. Dichteverteilung erzielt werden.

Erfindungsgemäß wird unter Ausbildung eines Innenform-Membranspalts ein/der Druck zwischen einer Innenform-Membran und einem Innenformkern der Innenform angelegt, wobei insbesondere der Druck mit zueinander verschiedenen Druckwerten als Membran-Vorformdruck zum Befüllen des Formraums mit dem Pressgut und insbesondere als Pressdruck zum Pressen des Pressguts angelegt wird.

Eine weitere Ausgestaltung besteht darin, dass ein/der Druck zwischen einer Innenform-Membran und einem Innenformkern der Innenform als Membran-Ansaugdruck angelegt wird zum Reduzieren eines/des Innenform-Membranspalts.

Eine Ausgestaltung besteht darin, dass der Druck abhängig von einem Positions- oder Streckenwert als Membran-Vorformdruck und abhängig von einem Druckwert als Pressdruck und/oder als Membran-Ansaugdruck angelegt wird.

Insbesondere erfolgt das Anlegen des Drucks an die Innenform ggfs. auch indirekt durch Anlegen des Drucks an die Außenform, wenn beispielsweise ein Rückfluss eines Druckmediums aus der Innenform durch insbesondere ein Ventil verhindert wird. Bei Anlegen nur eines Innendrucks und gesperrtem Druckmedium an der Außenform erfolgt dies entsprechend umgekehrt.

Zum Ausbilden eines Innenform-Membranspalts wird ein Volumen eines Druckmediums in die Innenform gefüllt, insbesondere das Volumen abhängig von einem Positions- oder Streckenwert eines Zylinders der Volumen- und/oder Drucksteuereinrichtung in die Innenform gefüllt.

Noch eine Ausgestaltung ist, dass an einem Aufnahmespalt zwischen der Membran der Pressformkomponente - insbesondere der ersten Pressformkomponente - und der darin eingesetzten Außenform ein Unterdruck angelegt wird, wobei der Unterdruck insbesondere über eine längere Zeitdauer angelegt wird als ein Druck, insbesondere Unterdruck, der an einer Entlüftungsöffnung des Formraums angelegt wird. Dadurch kann der Unterdruck zum Entlüften des Formraums abgeschaltet werden, um die oberen Formteile abzuheben, während der Unterdruck zum Festhalten der Außenform in der ersten Pressformkomponente während des Abhebens insbesondere der zweiten Pressformkomponente weiter anliegt.

Außerdem bevorzugt wird eine Außenform zum Pressen eines Pressteils aus einem pulver- und/oder granulatförmigen keramischen Pressgut - insbesondere eine Außenform einer solchen Pressenanordnung bzw. eines solchen Verfahrens - mit hinterschnittfreier Außenkontur und mit einem innenseitigen Formabschnitt zum Ausbilden eines Pressteils mit hinterschnittiger Innenkontur. Die hinterschnittfreie Außenkontur ermöglicht ein Einsetzen in einer erste Pressenkomponente mit einer druckbeaufschlagbaren Membran und eine Entnahme daraus. Trotzdem wird das Pressen eines hinterschnittigen Pressteils in der Außenform ermöglicht, da diese die hinterschnittiger Innenkontur hat. Das zumindest abschnittsweise elastische Material der Außenform überträgt dabei einen von der Membran der Pressenkomponente außenseitig anliegenden Pressdruck auf deren innenseitige Formwand.

Außerdem bevorzugt wird eine Außenform zum Pressen eines Pressteils aus einem pulver- und/oder granulatförmigen keramischen Pressgut, insbesondere eine derartig einsetzbare Außenform einer solchen Pressenanordnung bzw. eines solchen Verfahrens, wobei die Außenform zum Ausbilden eines Pressteils ausgebildet ist, wobei das Pressteil einen zumindest einen seitlichen Ansatz aufweisenden Behälter ausbildet bzw. formt und wobei die Außenform zumindest abschnittsweise aus einem elastischen Material ausgebildet ist und einen innenseitigen Formabschnitt - insbesondere Becherformabschnitt - und zumindest einen davon ausgehenden Formraum zum Ausbilden des seitlichen Ansatzes - insbesondere Henkels - aufweist.

Insbesondere hat eine solche Außenform einen innenseitigen Becherformabschnitt und zumindest einen davon ausgehenden Formraum zum Ausbilden eines Henkels aufweist und wobei zumindest Teile des Becherformabschnitts und des Formraums zum Ausbilden eines zumindest einen Henkel aufweisenden Behälters aus einem elastischen Material ausgebildet sind. Insbesondere ist die gesamte Außenform aus einem elastischen Material ausgebildet. Von außen auf die Außenform einwirkender Pressdruck wirkt dadurch über das Material der Außenform auf deren innenseitigen Abschnitte zur Ausbildung einer Becherwand und eines Henkels an der Becherwand.

Es ist eine Ausgestaltung, dass die Außenform einen Schlitz aufweist, wobei der Schlitz sich durch zumindest einen Teil eines Formabschnitts, insbesondere eines Bodenabschnitts erstreckt. Vorteilhaft ist ggfs. auch, wenn der Schlitz sich durch zumindest einen Teil eines Bodenabschnitts und in einer Ebene schräg, insbesondere quer zum Bodenabschnitt durch einen Hohlkörper- oder Becherformabschnitt erstreckt. Dies ermöglicht ein seitliches Aufbiegen der Außenform zur Entspannung und zur Entnahme des gepressten Guts. Der Schlitzverlauf quer zum Boden bewirkt, dass eine Entspannung des Behälters parallel zu seiner Mittenachse erfolgt, was insbesondere bei nicht zylindrisch geformten Pressteilen bzw. Behältern eine gleichmäßige Spannungsreduzierung in der Behälterwand bewirkt.

Eine Ausgestaltung davon ist, dass sich der Schlitz auch durch zumindest einen Henkelformabschnitt erstreckt. Dadurch entsteht eine Pressnaht im Bereich des Henkels anstelle im Bereich der Wandung des Bechers. Sofern Nahtreste nach einem Putzvorgang verbleiben sollten, stören diese dort nicht so sehr das Aussehen wie im Becherwandbereich. Außerdem ist ein Putzen im Bereich des stabilen Henkels einfacher als an der im Vergleich dazu dünnwandigen und empfindlicheren Becherwand.

Auch kann es eine Ausgestaltung sein, dass im Becherformabschnitt ein Henkeleinsatz oder ein sonstiger

Einsatz aus einem insbesondere starren Material eingesetzt ist oder einsetzbar ist. Ein Henkeleinsatz kann zweiseitig vom Formraum zum Ausbilden eines Henkels umgeben sein. Die Verwendung eines starren Materials bewirkt eine besonders vorteilhafte Druckwirkung auf das Pressgut, das sich in dem Formraum zum Pressen des Henkels befindet, da ein durch den Henkeleinsatz konstanter Gegendruck aufgebaut wird. Der Einsatz kann aber auch durch eine entsprechende Strukturierung der Außenform selber einteilig mit der Außenform und aus einem elastischen Material ausgebildet sein.

Eine Ausgestaltung einer solchen Innenform zum Pressen eines Pressteils aus einem pulver- und/oder granulatförmigen keramischen Pressgut besteht darin, dass die Innenform eine elastische Umfangswand - insbesondere eine elastische Membran als Umfangswand- aufweist.

Davon eine Ausgestaltung ist, dass die Innenform an einer Druckleitung der zweiten Pressformkomponente anschließbar ist zum innenseitigen Anlegen eines Drucks, insbesondere Pressdrucks in der Innenform.

Davon eine Ausgestaltung ist die Innenform mit einem Innenformkern, einem Bodenabschnitt einer/der Innenform-Membran, einem Umfangsabschnitt der Innenform-Membran und einer Befestigungseinrichtung, wobei die Befestigungseinrichtung den Bodenabschnitt an dem Innenformkern befestigt.

Bevorzugt wird außerdem eine derartige Pressenanordnung mit zumindest einem von einer solchen Außenform oder einer solchen Innenform.

Außerdem bevorzugt wird eine Vorrichtung zur Herstellung einer Außenform aus einem zumindest abschnittsweise elastischen Material - insbesondere einer derartigen Außenform, wobei die Vorrichtung zur Herstellung der Außenform aufweist mindestens zwei Seitenteile und mindestens ein Kernteil als Formteile, welche im zusammengesetzten Zustand zwischen sich einen Formraum zum Gießen der Außenform ausbilden, und ein insbesondere flächiges Schlitzformteil, welches teilweise - insbesondere nur teilweise - hineinragend zwischen die Seitenteile und das mindestens eine Kernteil einsetzbar oder eingesetzt ist. Insbesondere ragt das Schlitzformteil somit nicht nur zwischen die beiden Seitenteile, welche eine außenseitige Becherformwand ausbilden, sondern auch in das Kernteil hinein, welches eine innenseitige Becherformwand ausbildet. Das Schlitzformteil bzw. in einer gefertigten Außenform der Schlitz kann sich somit nur über einen kurzen Teil einer Formwand, insbesondere Becherformwand erstrecken, kann sich ganz durch diese hindurch bis zu einem Boden, in den Boden teilweise hinein oder ganz durch den Boden hindurch erstrecken. Insbesondere hat der Schlitz bzw. das diesen erzeugende Schlitzformteil eine Breite von weniger als einem Millimeter, insbesondere eine Breite in einem Breitenbereich von 0,1 - 0,5 mm, insbesondere in einem Breitenbereich von 0,2 - 0,4 mm.

Außerdem bevorzugt wird ein Verfahren zur Herstellung einer derartigen Außenform, bei dem mindestens zwei Seitenteile und mindestens ein Kernteil als Formteile zusammengesetzt werden, wobei diese im zusammengesetzten Zustand zwischen sich einen Formraum zum Gießen der Außenform ausbilden, wobei ein insbesondere flächiges Schlitzformteil teilweise - insbesondere nur teilweise - hineinragend zwischen die Seitenteile und das mindestens eine Kernteil eingesetzt wird und wobei nachfolgend die Außenform mit einem in diese hineinragenden Schlitz im Formraum zumindest abschnittsweise aus einem elastisch bleibenden Material gegossen wird.

Ein Ausführungsbeispiel wird nachfolgend anhand der Zeichnung näher erläutert. In den verschiedenen Figuren verweisen gleiche Bezugszeichen auf jeweils gleich aufgebaute oder gleich wirkenden Komponenten und Verfahrensschritte, weshalb die Ausführungen zu einer Figur diesbezüglich insbesondere auch für die übrigen Figuren gelten. Es zeigen:
- Fig. 1: eine seitlich Querschnittsansicht durch eine Pressenanordnung, insbesondere Behälter-Pressenanordnung;
- Fig. 2: eine seitliche Schnittansicht durch eine Außenform, welche in einer Pressenanordnung gemäß Fig. 1 einsetzbar ist;
- Fig. 3: eine seitliche Ansicht einer Innenform, welche in einer derartigen Pressenanordnung einsetzbar ist;
- Fig. 4A: die Pressenanordnung gemäß Fig. 1 mit einem darin gepressten Becher bei einem Entformungsschritt;
- Fig. 4B: die Anordnung gemäß Fig. 4A in einem nachfolgenden Entformungsschritt;
- Fig. 4C: eine bei dem Entformungsschritt gemäß Fig. 4B entnommene Anordnung aus Außenform, gepresstem Behälter und Innenform in einer um relativ zu Fig. 4B um 90° verdrehten Seitenansicht;
- Fig. 4D: einen 4C nachfolgenden Entformungsschritt zum Entformen und Entnehmen des gepressten Behälters;

- Fig. 5A: einen gegenüber Fig. 4A modifizierten Entformungsschritt;
- Fig. 5B: einen gegenüber 4B modifizierten Entformungsschritt;
- Fig. 6A: eine Außenform-Herstellungsform in Draufsicht von oben;
- Fig. 6B: eine seitliche Ansicht auf einzelne Komponenten gemäß Fig. 6A in teilweise geschnittener Ansicht;
- Fig. 7A: einen bevorzugten zeitlichen Druckverlauf; und
- Fig. 7B - 7F: Schnittdarstellungen durch einen Formausschnitt zu verschiedenen Zeitpunkten eines Zyklus zum Pressen eines Pressteils.

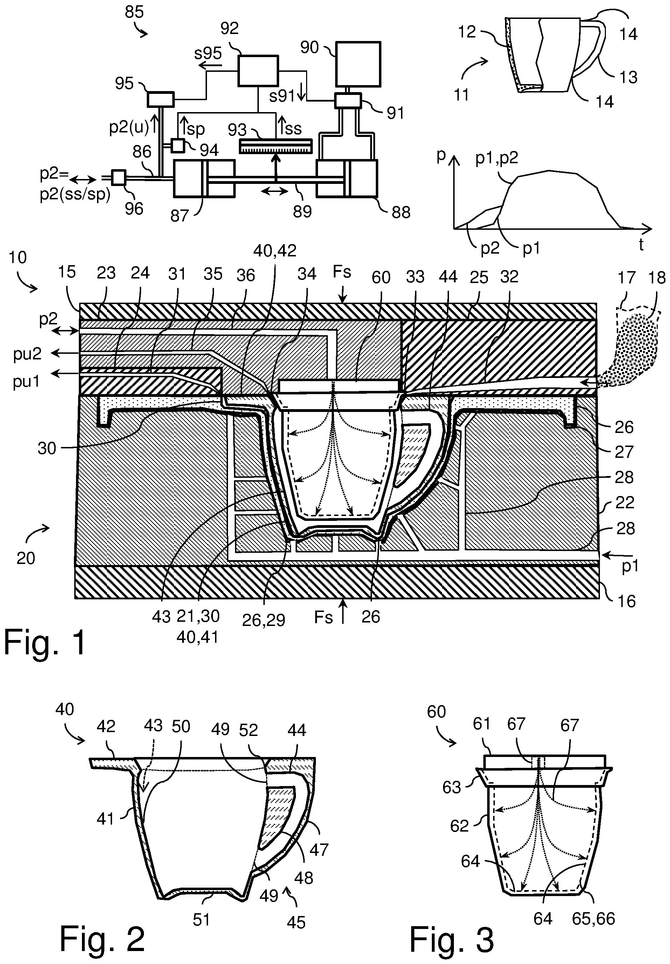

Wie aus Fig. 1 ersichtlich, dient eine beispielhaft dargestellte Behälterpressenanordnung 10 als eine Pressenanordnung zum isostatischen Pressen eines Pressteils, insbesondere tassenförmigen Behälters 11 bzw. Hohlkörpers. Der beispielhaft dargestellte Behälter 11 besteht aus einem eigentlichen Hohlkörper bzw. Becherabschnitt 12 und einem daran ansitzenden seitlichen Ansatz, insbesondere Henkel 13. Der beispielhafte Henkel 13 ist über einen oberen und einen unteren Ansatzansatz bzw. Henkelansatz 14 mit dem Becherabschnitt 12 verbunden. Die Behälterpressenanordnung 10 ist so aufgebaut, dass der Behälter 11 mit Becherabschnitt 12 und Henkel 13 in einem einzigen Pressvorgang aus einem pulver- und/oder granulatförmigen Pressgut pressbar ist.

Die Behälterpressenanordnung 10 weist eine insbesondere oberseitige Pressform-Aufnahmekomponente 15 und eine insbesondere unterseitige Pressform-Aufnahmekomponente 16 auf, zwischen denen eine eigentliche Pressform 20 einspannbar ist. Über einen Pressgutbehälter 17 ist pulver- und/oder granulatförmiges, insbesondere keramisches Pressgut 18 zu der Pressform 20 zuführbar.

Die Pressform 20 weist eine erste, insbesondere unterseitige Pressformkomponente 22 und eine zweite, insbesondere oberseitige Pressformkomponente 23 auf. Richtungsangaben wie oben oder unten dienen lediglich zu Veranschaulichungszwecken. Eigenständige Komponenten oder der insbesondere zweiten Pressformkomponente 23 zugeordnete Komponenten sind dargestellte Schließkomponenten 24, 25. Im geschlossenen Zustand sitzen auf der ersten Pressformkomponente 22 oberseitig mittig die zweite Pressformkomponente 23 und seitlich dazu die Schließkomponenten 24, 25 auf.

Die erste Pressformkomponente 22 weist einen Pressraum auf, in dessen Bereich sie eine Membran 26 trägt. Die Membran 26 ist insbesondere in seitlicher Richtung an der Oberseite der ersten Pressformkomponente 22 befestigt, wozu Membranbefestigungsmittel 27 in für sich bekannter Art und Weise einsetzbar sind.

Zum Pressen eines Behälters 11 wird vor dem Schließen der Behälterpressenanordnung 10 eine Außenform 40 in dem Formraum der ersten Pressformkomponente 22 eingesetzt. Die Außenform 40 ist in Fig. 1 und alleine in Fig. 2 mit zusätzlichen Bezugszeichen skizziert. Die Außenform 40 ist so dimensioniert, dass sie innerhalb ihres Körpers ein Pressen des Behälters 11 einschließlich des Behälterabschnitts 12 und des Henkels 13 ermöglicht.

Die Außenform 40 weist eine Becher-Membran 41 auf, welche aus einem elastischen Material ausgebildet ist und im eingesetzten Zustand mit ihrer Außenseite an der Membran 26 der ersten Pressformkomponente 22 anliegt. Ein auf die Membran 26 wirkender Druck p1 als Pressdruck verformt somit nicht nur die Membran 26, sondern zusätzlich auch die Becher-Membran 41 in innenseitiger Richtung.

Die Becher-Membran 41 ist vorzugsweise dünnwandig ausgebildet und hat im Wesentlichen die Form, welche zum Pressen des Becherabschnitts 12 erforderlich ist. Im Wesentlichen entspricht die Form der Becher-Membran 41 somit insbesondere einer Form des Becherabschnitts 12.

Oberseitig geht die Becher-Membran 41 in einen von der Becher-Membran 41 schräg, insbesondere quer nach außen verlaufenden Randabschnitt 42 über. Der Randabschnitt 42 erstreckt sich in seitlicher Richtung und dient zur Handhabung der Außenform 40 beim Entformen sowie zur Ausrichtung und Anordnung der Außenform 40 in der ersten Pressformkomponente 22 bzw. in der Membran 26 der ersten Pressformkomponente 22. Insbesondere zur Handhabung beim Entformen können aber auch andere Abschnitte der Außenform vorgesehen sein.

Zu einer Seite hin ist an der Außenform 40 ein Ansatz- bzw. insbesondere Henkelformabschnitt 45 ausgebildet, welcher sich in außenseitiger Richtung von der Becher-Membran 41 seitlich erstreckt. Der Henkelformabschnitt 45 ist so dimensioniert, dass er einen Formraum 44 zum Ausbilden eines Henkels 13 umschließt. Eine aus Sicht des Formraums 44 für den Henkel außenseitige Wandung des Henkelformabschnitt 45 ist als eine ansatzseitige bzw. henkelseitige Außenwand 47 vorzugsweise dünn ausgebildet. Die ansatz- bzw. henkelseitige Außenwand 47 liegt an einer entsprechend geformten Aufnahme in der ersten Pressformkomponente 22 bzw. in der der Membran 26 der ersten Pressformkomponente 22 an, wenn die Außenform 40 in der ersten Pressformkomponente 22 eingesetzt ist.

Die Außenform 40 weist somit einen innenseitigen Formraum 43 für den Hohlkörper bzw. Becherabschnitt auf, sowie zusätzlich im Henkelformabschnitt 45 einen Formraum 44 für den seitlichen Ansatz, insbesondere Henkel. Der Formraum für den Becherabschnitt 43 entspricht von der Kontur her einer Außenform des Becherabschnitts 12 eines zu pressenden Bechers. Der Formraum 44 für den Henkel entspricht von seinem Verlauf her dem zu pressenden Henkel 13 und mündet an mindestens einer Stelle, insbesondere an zwei Stellen, in den Formraum 43 für den Becherabschnitt, um bei Pressen einen Henkelansatz auszubilden. Die Kontur der beiden miteinander verbundenen Formräume 43, 44 ist dabei so dimensioniert, dass darin eingefülltes Granulat bei anliegendem Pressdruck zu der letztendlich gewünschten Behälterform gepresst wird.

Insbesondere im Fall eines zu pressenden Henkels mit zwei Henkelansätzen ist in dem Ansatzformabschnitt, insbesondere Henkelformabschnitt 45 zwischen einem Wandungsabschnitt der Becher-Membran 41 und dem Formraum 44 für den Henkel ein Henkeleinsatz ausgebildet oder eingesetzt.

Insbesondere im Fall eines eingesetzten solchen oder anderen Versteifungs- oder Henkeleinsatzes 48 ist die Außenform 40 im Wesentlichen einheitlich aus einem einzigen elastischen Material ausgebildet, während der Versteifungs- oder Henkeleinsatz 48 als darin eingesetzte Komponente bevorzugt aus einem weniger elastischen oder relativ zu einwirkenden Drücken, insbesondere Pressdrücken starren Material ausgebildet ist. Der beispielhafte Henkeleinsatz 48 bildet somit ein Widerlager für ein innenseitig an der Becher-Membran 41 anliegendes Pressgut und oberseitig, außenseitig und unterseitig als Widerlager für in dem Formraum 44 für den Henkel befindliches Pressgut, wenn darauf die Drücke, insbesondere Pressdrücke einwirken.

Bei einer bevorzugten Ausgestaltung erstreckt sich von einem Bodenabschnitt 51, welcher eine gewölbte Kontur aufweisen kann, seitlich aufwärts die Becher-Membran 41. Die Innenseite der Becher-Membran 41 und die Oberseite des Bodenabschnitts 51 dienen zum Ausbilden einer Außenseite eines Becherabschnitts 12 eines zu pressenden Behälters 11. Abgesehen von dem Henkelformabschnitt 45 sind diese bevorzugt dünnwandig aus elastischem Material ausgebildet. Im Bereich des Henkelformabschnitts 45 sind in dem innenseitigen Hohlkörperformabschnitt, insbesondere Becherformabschnitt 50 eine oder bevorzugt zwei Ansatzöffnungen, insbesondere Henkelansatzöffnungen 49 ausgebildet, über welche eine durchgehende Verbindung in den Formraum 44 für den Henkel führt. Außenseitig um den Formraum 44 für den Henkel ist der Henkelformabschnitt 45 vorzugsweise dünnwandig aus elastischem Material ausgebildet. Oberseitig geht der Bereich der Becher-Membran 41 in den Randabschnitt 42 über, wobei im Übergang zum Randabschnitt 42 ein abschnittsweise nach innen und dann wieder nach außen verlaufender oberer Randabschnitt 52 ausgebildet sein kann. Ein solcher oberer Randabschnitt 52 dient insbesondere vorteilhaft als Anlagefläche für eine Membran oder einen Körper einer im Pressbetrieb anliegenden Innenform und/oder Komponente der zweiten Pressformkomponente 23.

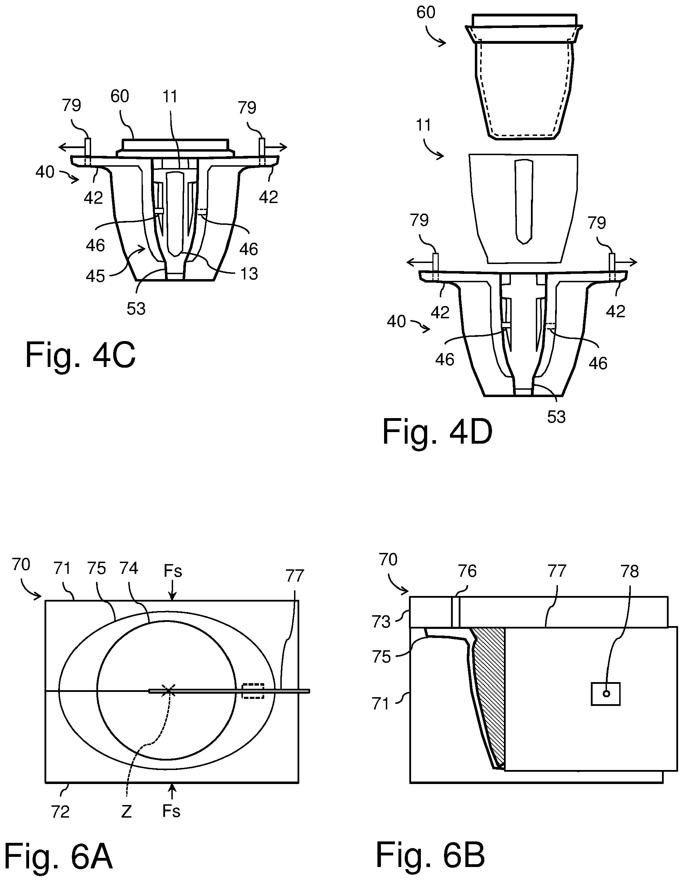

Wie insbesondere Fig. 4C und Fig. 4D entnehmbar ist, führt durch die Außenform 40 von einer Seite her ein Schlitz 53 in die Außenform 40 hinein. Der Schlitz 53 führt dabei vorzugsweise bis über einen Mittelpunkt Z vom Becherabschnitt der Außenform 40, wie in Fig. 6A skizziert ist. Dadurch ist die Außenform 40 in seitlicher Richtung aufbiegbar, um eine seitliche Druckentlastung eines geformten Becherabschnitts 12 vorzunehmen und den Behälter 11 aus der Außenform 40 entnehmen zu können. Bevorzugt verläuft der Schlitz 53 durch einen Bereich, in welchem der Henkel 13 zu formen ist. Mit anderen Worten verläuft der Schlitz 53 bevorzugt quer durch den Formraum 44 für den Henkel und die innenseitige Membran des innenseitigen Becherformabschnitts 50 sowie insbesondere auch durch zumindest einen Teil des Bodenabschnitts 51 hindurch.

Ein seitliches Auseinanderziehen mittels einer Entformungseinrichtung 79, welche beispielsweise stiftförmig in Öffnungen eingreift, welche insbesondere in dem Randabschnitt 42 der Außenform ausgebildet sind, legt somit den geformten Henkel 13 frei. Dabei wird auch der Henkeleinsatz 48 aus dem Bereich des Henkels seitlich wegbewegt, wobei der Henkeleinsatz 48 ebenfalls durch den Schlitz 53 geteilt ausgebildet sein kann.

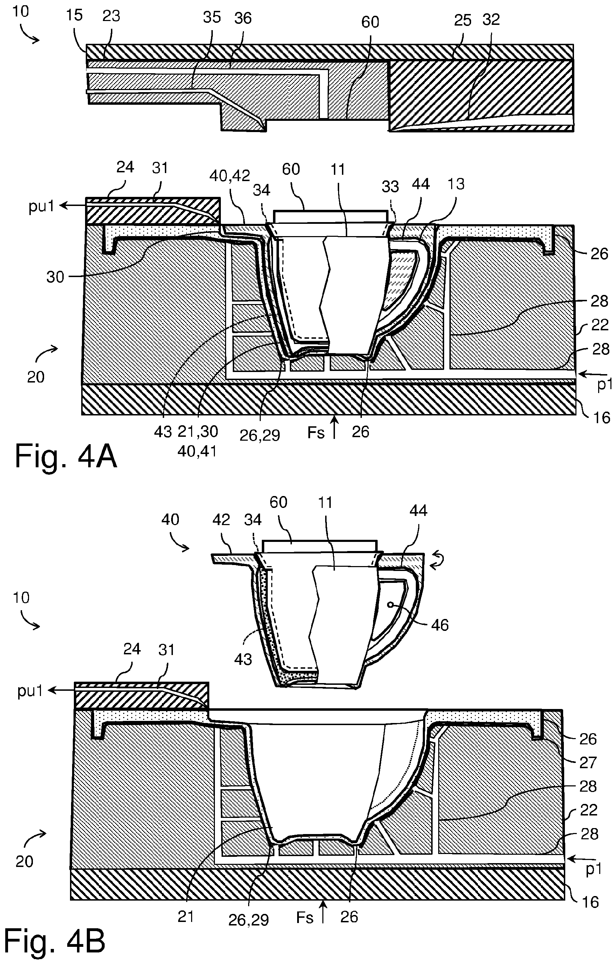

Nach einer Entnahme eines Bechers 11 und vor erneutem Einsetzen in die erste Pressformkomponente 22 wird die Außenform 40 optional mittels eines Formschlosses 46 verriegelt. Ein Formschloss 46 kann beispielsweise durch eine oder mehrere Steck- oder Rastverbindungen ausgebildet sein, welche im geschlossenen Zustand des Schlitzes 53 ineinander eingreifen (Fig. 4B - Fig. 4D).

Fig. 3 zeigt eine bevorzugte Innenform 60, welche als feste Komponente der zweiten Pressformkomponente 23 oder als separat einsetzbare Innenform 60 ausgebildet sein kann. Die Innenform 60 weist in ihrem unterseitigen Abschnitt eine Außenkontur auf, welche in der Außenform 40 eingesetzt in Verbindung mit der Innenseite der Außenform 40 zwischen diesen den Formraum 43 für den Becherabschnitt ausbildet.

Die Innenform 60 weist einen oberseitigen Befestigungsabschnitt 61 auf, über welchen die Innenform 60 an der zweiten Pressformkomponente 23 anlegbar oder daran befestigbar ist. Prinzipiell ist auch eine einzeilige Ausgestaltung mit dem restlichen Körper der zweiten Pressformkomponente 23 realisierbar. Unterseitig erstreckt sich von dem Befestigungsabschnitt 61 ein Körper, dessen äußere Umfangswand die innenseitige Wandung des Formraums 43 ausbildet. Ein oberseitiger Randabschnitt 63, welcher von der Umfangswand nach oben außenseitig verbreitert ausgebildet ist, dient als Gegenelement für den oberen Randabschnitt 52 der Außenform 40. Im zusammengesetzten Zustand bilden somit die Umfangswand der Innenform 60 und die Becher-Membran 41 sowie der Bodenabschnitt 51 der Außenform 40 den Formraum 43 zum Formen eines Becherabschnitts aus.

Oberseitig dazu bilden der obere Randabschnitt 63 der Innenform 60 und der obere Randabschnitt 52 der Außenform 40 eine Füllöffnung 33 zum Befüllen der Formräume mit dem Pressgut 18 und außerhalb des Bereichs der Füllöffnung 33 eine Entlüftungsöffnung bzw. einen Entlüftungsspalt 34 zum Entlüften des Formraums aus.

Die Füllöffnung 33 ist über eine Füllleitung 32 an den Pressgutbehälter 17 angeschlossen. Insbesondere führt die Füllleitung 32 durch eine seitliche Schließkomponente 25 hindurch. Die Füllleitung 32 kann aber zum Beispiel auch durch einen einheitlichen Körper der zweiten Pressformkomponente 23 geführt sein. Zu der Entlüftungsöffnung 34 führt eine Druckleitung 35, welche insbesondere durch den Körper der zweiten Pressformkomponente 23 geführt ist und zum Anlegen eines Unterdrucks pu2 dient, um die Formräume 43, 44 beim Befüllen und Pressen zu entlüften.

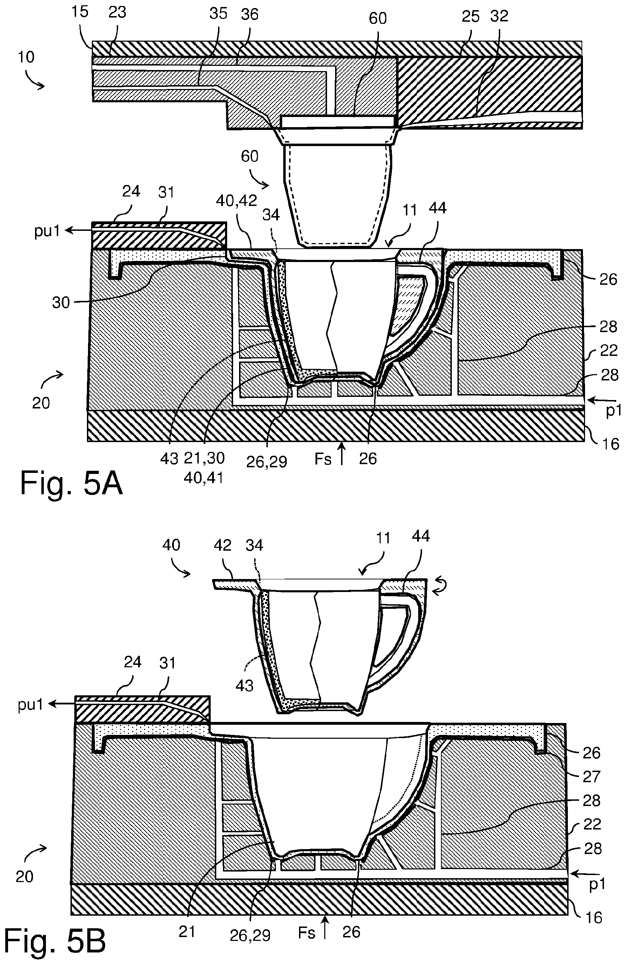

Eine weitere Druckleitung 31 führt durch die zweite Pressformkomponente 23 oder bevorzugt durch eine davon getrennt verstellbare Schließkomponente 24. Diese Druckleitung 31 endet in einem Übergangsbereich zwischen der Membran 26 der ersten Pressformkomponente 22 und der Außenform 40. In dem Übergangsbereich befindet sich eine Öffnung, insbesondere ein Aufnahmespalt 30 zwischen der Membran 26 und der Außenform 40 bzw. insbesondere deren außenseitiger Membran. Über die Druckleitung 31 ist ein Unterdruck pul anlegbar, welcher insbesondere verschieden zu dem Unterdruck pu2 zur Entlüftung sein kann. Der Unterdruck pul bewirkt einen Unterdruck zwischen der Membran 26 der ersten Pressformkomponente 22 und der Außenform 40, so dass die Außenform 40 an der ersten Pressformkomponente 22 angesaugt und daran bzw. in deren Formraum fixiert wird. Bei einem Abheben der zweiten Pressformkomponente 23 einschließlich gegebenenfalls der Schließkomponente 25 mit der Füllleitung 32 verbleibt somit die Außenform 40 in der ersten Pressformkomponente 22 fixiert, wie dies in Fig. 4A und Fig. 5A skizziert ist. Die zweite Schließkomponente 25 wird entweder unmittelbar vor einem Entnehmen der Außenform 40 abgehoben oder verbleibt in der Position an der ersten Pressformkomponente 22 auch während des Entnehmens der Außenform 40, wie dies in Fig. 4B, 5B skizziert ist. Optional kann die Schließkomponente 25 auch als Bestandteil der ersten Pressformkomponente ausgebildet sein. Auch kann optional die Druckleitung zum Ansaugen der Außenform 40 an der ersten Pressformkomponente 22 durch einen Bereich der ersten Pressformkomponente 22 und einen insbesondere oberen Abschnitt der Membran 26 geführt sein, wodurch auch die Schließkomponente 24 entfallen könnte.

Erfindungsgemäß ist die Innenform 60 in dem Bereich zur Ausbildung des Formraums 43 für den Becherabschnitt nicht aus einem starren oder elastischen Vollkörper ausgebildet, sondern weist außenseitig eine Innenform-Membran 64 auf. Die Innenform-Membran 64 ist innenseitig mit einem Druck p2 beaufschlagbar, welcher über Druckleitungen 36, 67 durch die zweite Pressformkomponente 23 und den Befestigungsabschnitt 61 der Innenform 60 zuführbar ist.

Optional kann die Innenform-Membran 64 als eine hohle Membran ausgebildet sein, in welcher innenseitig der Druck p2 als Pressdruck anliegt. Bevorzugt weist die Innenform 60 aber einen sich unterhalb der Innenform-Membran 64 erstreckenden Körper als Innenformkern 66 auf, zwischen dessen Außenumfang und der Innenseite der Innenform-Membran 64 ein Innenform-Membranspalt 65 ausgebildet ist, in welchen der Druck p2 eingeleitet wird.

Zum Pressen eines Behälters 11 wird in die erste Pressformkomponente zuerst die Außenform 40 eingesetzt. Nachfolgend werden die weiteren Komponenten aufgesetzt, das heißt die Innenform 60, soweit vorhanden die Schließkomponenten 24, 25 und die zweite Pressformkomponente 23. Dabei kann die Innenform 60 an der zweiten Pressformkomponente 23 lösbar fixiert sein, um einen definierten Abstand zu dem Innenraum der Außenform zu halten, so dass der Formraum 43 mit ausreichender Größe ausgebildet wird. Bei separatem Einsetzen der Innenform 60 direkt in die Außenform 40 können auch die aneinander anliegenden oberen Randabschnitte 52, 63 so geformt und aneinander abgestützt sein, dass der Formraum 43 definiert ausgebildet ist und auch ausreichend große Füll- und Entlüftungsöffnungen 33, 34 verbleiben. Letztendlich werden die erste und die zweite Pressformkomponente 22, 23 mit den darin aufgenommenen Komponenten gegeneinander verspannt, was mit Hilfe der Pressform-Aufnahmekomponenten 15, 16 unter Anlegen außenseitiger Schließkräfte Fs erfolgen kann.

Nachfolgend wird Pressgut 18 über die Füllleitung 32 in den Formraum 43 für den Becherabschnitt eingefüllt, wobei über den Formraum 43 für den Becherabschnitt und die Henkelansatzöffnungen 49 das Pressgut auch in den Formraum 44 für den Henkel gelangt. Bei einem nachfolgenden Pressvorgang wird somit in einem einzigen Pressvorgang ein Behälter 11 einschließlich Becherabschnitt 12 und daran fest ausgebildetem Henkel 13 gepresst.

Rechts oberhalb zeigt Fig. 1 ein beispielhaftes Diagramm eines Verlaufs von Druck p über die Zeit t. Bevorzugt wird demnach für die Außenform 40 und die Innenform 60 ein jeweils individueller Druck p1 bzw. p2 als Pressdruck angelegt. Insbesondere wird bevorzugt zuerst ein Druck p2 als Pressdruck in die Innenform 60 eingeleitet, bevor ein Druck p1 als Pressdruck an die Membran 26 der ersten Pressformkomponente 22 und darüber auf die Membran, insbesondere Becher-Membran 41 und den Henkelformabschnitt 45, geleitet wird. Die Druckverläufe der Drücke p1, p2 als Pressdrücke können während des gesamten Presszyklus zueinander verschieden sein, können aber auch insbesondere während einer Hauptpressphase gleichmäßig verlaufen oder gleich sein.

Nach dem Pressen wird die Pressform 20 geöffnet, indem (Fig. 4A) die zweite Pressformkomponenten 23 und gegebenenfalls alle oder ein Teil der Schließkomponenten 25 abgehoben werden. Dabei verbleibt die Innenform 60 in der Außenform 40 eingesetzt und zusammen mit der Außenform 40 in der ersten Pressformkomponente 22. In einem nachfolgenden Schritt wird die Außenform 40 zusammen mit der darin eingesetzten Innenform 60 und dem zwischen diesen geformten Behälter 11 aus der ersten Pressformkomponente 22 entnommen (Fig. 4B).

Zum Entformen des Behälters 11 wird die Außenform 40 längs des Schlitzes 53 geöffnet, wie Fig. 4C entnehmbar ist. Erst in einem nachfolgenden Schritt werden die Innenform 60 und nachfolgend der gepresste Behälter 11 aus der Außenform 40 nach oben hin entnommen.

Fig. 5A und 5B zeigen ein demgegenüber modifiziertes Verfahren zum Entformen. Bei der dargestellten Ausführungsvariante wird die Innenform 60 bereits zusammen mit der zweiten Pressformkomponente 23 nach oben abgehoben, wobei die Außenform 40 mit dem gepressten Behälter 11 in der ersten Pressformkomponente 22 verbleibt. Nachfolgend wird die Außenform 40 mit dem Behälter 11 aus der ersten Pressformkomponente entnommen, um letztendlich den Behälter 11 aus der Außenform 40 zu entnehmen.

Fig. 6A, 6B zeigen eine Außenform-Herstellungsform 70, welche insbesondere zum Herstellen der Außenform 40 mittels eines Spritzgießverfahrens ausgebildet ist. Zum Gießen wird dabei ein Material verwendet, mit welchem eine elastische Außenform herstellbar ist.

Die Außenform-Herstellungsform 70 weist insbesondere zwei Seitenteile 71, 72 auf, welche jeweils eine Hälfte der Becher-Membran 41 formen. Oberseitig und gegebenenfalls unterseitig sind weitere Seitenteile 73 anordbar, welche zum Ausbilden eines offenen Innenraums des zu formenden Becherabschnitts bzw. eines nach oben gewölbten Bodenabschnitts 51 der Außenform strukturiert sind. Insbesondere weist mindestens eines der Seitenteile 71 - 73 eine Gießöffnung 76 zum Hineingießen des Gießmaterials auf. Wie insbesondere Fig. 6B entnehmbar ist, ragt von dem oberen Seitenteil 73 ein Kernteil 74 in die beiden Seitenteile 71, 72 hinein, so dass zwischen Innenwänden der beiden Seitenteile 71, 72 und einem Außenumfang des Kernteils 74 ein Formraum 75 zum Ausbilden der Becher-Membran 41 und des Bodenabschnitts 51 entsteht.

Zum Ausbilden des Schlitzes 53 ist ein weiteres Formteil in der Außenform-Herstellungsform 70 eingesetzt, welches als ein Schlitzformteil 77 geformt ist. Das Schlitzformteil 77 führt von einer Seite her zwischen die beiden seitlichen Seitenteile 71, 72 in den Raum, in welchem der Schlitz 53 auszubilden ist. Das Schlitzformteil 77 erstreckt sich somit bevorzugt auch zumindest teilweise durch den Formraum 43 für den Becherabschnitt und insbesondere auch durch den Formraum 44 für den Henkel. Je weiter sich das Schlitzformteil 77 zwischen den beiden Seitenteilen 71, 72 erstreckt, desto weiter wird der Schlitz 53 bevorzugt auch im Bodenabschnitt 51 der Außenform ausgebildet. Vorzugsweise erstreckt sich das Schlitzformteil 77 bis über einen Mittelpunkt z des zu formenden Bodenabschnitts 51. Dies hat zur Folge, dass beim Pressen eines Behälters 11 mit einer solchen Außenform 40 ein entsprechend langer außenseitiger Grat an dem Becherabschnitt 12 entsteht, welcher zu verputzen ist. Daher wird bevorzugt, wenn das Schlitzformteil 77 bzw. der Schlitz 53 sich nicht zu weit in den Bereich des Becherabschnitts erstrecken. Eine Erstreckung sollte so weit sein, dass unter Berücksichtigung der Elastizität der Außenform 40 insbesondere ein ausreichendes Aufbiegen zur Entnahme eines gepressten Behälters aus einer solchen Außenform 40 ermöglicht wird.

Das Schlitzformteil 77 kann insbesondere Strukturformelemente 78 aufweisen, welche zum Ausbilden und/oder Einsetzen von einem Formschloss und/oder einem Henkeleinsatz 48 dienen. Neben einer Außenform 40 mit einem in diese hineinführenden Schlitz 53 sind auch mehrteilige Außenformen realisierbar, beispielsweise um eine Schüssel mit mehreren außenseitigen Henkeln zu pressen. Auch können Außenformen mit mehreren in diese hineinführenden Schlitzen ausgebildet werden, um mehrere umfangsseitige Henkel separat entformen zu können, indem zwei oder mehr Schlitze zum Entformen aufbiegbar sind.

Eine bevorzugte Schlitzbreite liegt im Bereich von ca. 0,3 mm Schlitzbreite.

Fig. 1 zeigt schematisch eine bevorzugte Anordnung einer Drucksteuereinrichtung 85 zum Bereitstellen des Druck p2, der an die Innenform 60 angelegt wird.

Eine Druckleitung 86 der Drucksteuereinrichtung 85 ist an die Druckleitung 67 anschließbar bzw. angeschlossen, um den Druck p2 für die Innenform 60 bereitzustellen. Die Druckleitung 86 führt mit ihrem anderen Ende zu einer Druckquelle, insbesondere einem Druckzylinder eines zweiten Druckkreises 87. Je nach Position eines Kolbens in dem Druckzylinder wird während eines Presszyklus ein entsprechend hoher oder niedriger Druck p2 an der Innenform 60 angelegt.

Der Kolben dieses Druckzylinders ist über eine Verstellkomponente 89, insbesondere eine Kolbenstange mit einem Kolben eines weiteren Druckzylinders gemeinsam verstellbar verbunden. Der weitere Druckzylinder ist Komponente eines ersten Druckkreises 89. Der weitere Druckzylinder ist über ein Drucksteuerventil 91 mit einer Druckquelle 90 verbunden. Der Kolben des weiteren Druckzylinders ist so mittels des Drucksteuerventils 91 in gewünschte Positionen verstellbar. Durch die Kopplung der beiden Druckkreise 87, 89 ist auch der Druck p2 für die Innenform 60 abhängig von einer Steuerung des Drucksteuerventils 91 steuerbar.

Eine Steuereinrichtung 92, insbesondere ein zentraler Prozessor oder eine zentrale Steuereinrichtung der gesamten Pressenanordnung ist zur Steuerung des Drucksteuerventils 91 ausgelegt, insbesondere programmiert.

Ein Positions- oder Weg-Aufnehmer 93 bzw. Sensor ist zur Erfassung einer Position oder Bewegung der Verstellkomponente 89 bzw. der Kolben in zumindest einem der Druckzylinder angeordnet und ausgebildet, davon abhängig einen Positions- oder Streckenwert ss an die Steuereinrichtung 92 anzulegen. Auch sind Ausgestaltungen realisierbar, bei denen der Positions- oder Weg-Aufnehmer 93 bereits einen an der Druckleitung 86 anliegenden Druck p2 bestimmt und an die Steuereinrichtung 92 anlegt.

Ein Drucksensor 94 ist zur Erfassung des Drucks p2 im zweiten Druckkreis 87 an insbesondere der Druckleitung 86 angeordnet und ausgebildet, einen dem jeweils momentanen Druck p2 entsprechenden Druckwert sp an die Steuereinrichtung 92 anzulegen. Auch sind Ausgestaltungen realisierbar, bei denen der Drucksensor an einer Druckleitung des ersten Druckkreises 88 angeordnet ist und einen Druck in dessen Druckzylinder bestimmt, da die Drücke in den beiden Druckkreisen in zumindest einem Teil des Presszyklus in einem definierten Verhältnis zueinander stehen.

Die Steuereinrichtung 92 steuert das Drucksteuerventil 91 mittels eines Steuersignals s91 für die Innenform-Druckerzeugungseinrichtung insbesondere abhängig vom anliegenden Druckwert sp und/oder Positions- oder Streckenwert ss. Insbesondere ist die Drucksteuereinrichtung 85 als eine Volumen- und Druck-Steuereinrichtung ausgestaltet.

Optional weist die Anordnung außerdem eine Unterdruckeinrichtung 95 auf, welche mit der Druckleitung 86 verbunden ist. Die Unterdruckeinrichtung 95 ist ausgelegt, vor einem Entformen eines gepressten Pressteils 11 einen Druck p2(u) als Membran-Ansaugdruck in der Innenform 60 anzulegen. Alternative Ausgestaltungen legen einen ausreichenden Druck beispielsweise mittels des ersten Druckkreises an die Druckleitung 86 an. Die Unterdruckeinrichtung 95 ist insbesondere durch die Steuereinrichtung 92 mittels eines Steuersignal s91 steuerbar.

In der Druckleitung 86 ist bevorzugt ein Ventil 96 eingesetzt, welches insbesondere den Rückfluss aus der Innenform 60 sperren lässt. Insbesondere kann ein solches Ventil 96 je nach Ausgestaltung vor und/oder hinter einer Einmündung der Unterdruckeinrichtung 95 in die Druckleitung 86 angeordnet sein.

Weitere Komponenten der Drucksteuereinrichtung 85 sind beispielsweise in der Figur nicht skizzierte weitere Ventile zur Steuerung des Druckablaufs.

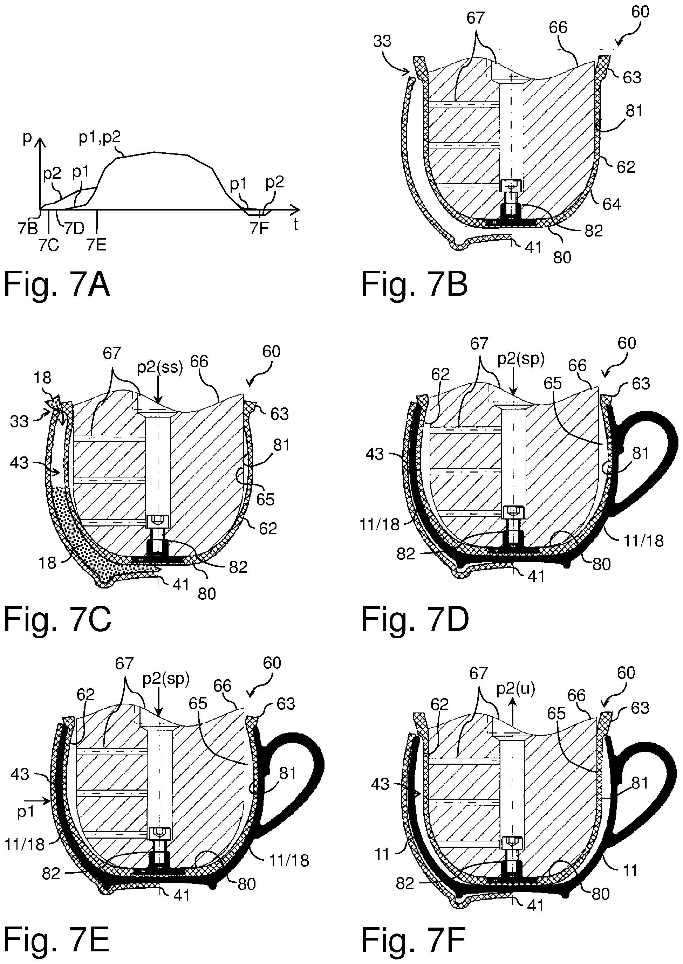

Fig. 7B - 7F zeigen schematische Schnittdarstellungen durch einen Formausschnitt zu verschiedenen Zeitpunkten eines Zyklus zum Pressen eines Pressteils.

Eine bevorzugt ausgestaltete Innenform 60 weist einen Bodenabschnitt 80 der Innenform-Membran 64 und einen sich seitlich davon in in der Figur oberseitiger Richtung erstreckenden Umfangsabschnitt 81 der Innenform-Membran 64 auf.

Mittels einer Befestigungseinrichtung 82 für die Innenform-Membran 64 ist der Bodenabschnitt 80 der Innenform-Membran 64 an dem Innenformkern 66 der Innenform 60 befestigt. Die Befestigung erfolgt dabei je nach Ausgestaltung insbesondere so, dass der Bodenabschnitt 80 direkt an dem Innenformkern 66 anliegt oder bei anliegendem Druck p2 nur einen begrenzten Abstand zu dem Innenformkern 66 einnehmen kann. Hingegen kann ein anliegender Druck p2 den Umfangsabschnitt 81 der Innenform-Membran 64 unter Ausbildung des Innenform-Membranspalts 65 von dem Körper des Innenformkerns 66 beabstanden. Die Form des Innenform-Membranspalts 65 hängt im Betrieb insbesondere von einer konkreten Ausgestaltung des Umfangsabschnitts 81 der Innenform-Membran 62 und des anliegenden Drucks p2 ab.

Fig. 7A zeigt einen beispielhaften zeitlichen Druckverlauf während eines Presszyklus, wobei der Zeitachse beispielhafte der Darstellungen der Figuren 7B - 7F zugeordnet sind.

Fig. 7B zeigt einen ersten zeitlichen Zustand der in der Pressenanordnung 10 zusammengesetzten Innenform 60 und Außenform 40. Dabei liegt der Umfangsabschnitt 81 der Innenform-Membran 64 bevorzugt an dem Innenformkern 66 an. An der Innenform 60 liegt entsprechend kein Druck p2 oder ein geringer Druck p2, insbesondere ein Unterdruck relativ zum Umgebungsdruck, insbesondere relativ zum Formraum 43 an, wie der Druck p2(u) als Membran-Ansaugdruck. Fig. 7C zeigt einen zweiten zeitlichen Zustand, bei dem an der Innenform 60 als Druck p2 als Membran-Vorformdruck angelegt wird, so dass zwischen dem Innenformkern 66 und der Innenform-Membran 64 der definierte oder definierbare Innenform-Membranspalt 65 ausgebildet wird.

Dabei und/oder gemäß dazu wird bei diesem Schritt der Membranspalt 65 bevorzugt durch Einfüllen eines definierten bzw. definierbaren Volumens befüllt, damit der Membranspalt 65 die gewünschte Form einnimmt. Der sich dabei in der Innenform 60 einstellende Druck p2(ss) ergibt sich somit als Membran-Vorformdruck abhängig vom eingefüllten Volumen. Das Einfüllen des Volumens erfolgt insbesondere dadurch, dass die Volumen- und Druck-Steuereinrichtung 85 in die Druckleitung 86 ein entsprechendes Volumen einfüllt. Dazu wird insbesondere der Positions- oder Streckenwert ss verwendet. Der Positions- oder Streckenwert ss als insbesondere Kolbenhub bestimmt in Verbindung mit einer Kolbenfläche des Druckzylinders 87 das Volumen.

Nach Ausbildung des Membranspalts 65 wird der Formraum 43 für den Hohlkörper 11 mit dem Pressgut 18 befüllt. Ggfs. wird dabei der als Membran-Vorformdruck dienende Druck p2(ss) angepasst, insbesondere mit zunehmender Befüllung mit dem Pressgut 18 erhöht.

In diesem Abschnitt des Presszyklus steuert oder regelt die Steuereinrichtung 92 somit den Druck p2 und/oder das Volumen mittels des Positions- oder Streckenwerts ss, um eine gewünschte Ausdehnung des Innenform-Membranspalt 65 zu steuern.

Fig. 7D zeigt einen dritten zeitlichen Zustand, bei dem der Formraum 43 für den Hohlkörper 11 mit dem Pressgut 18 befüllt wurde und bei dem nachfolgend der Druck p2 an der Innenform 60 erhöht wurde zu einem zumindest ersten Vorverdichtungs- oder Pressdruck p2(sp).

Bevorzugt wird das Anlegen des Vorverdichtungs- oder Pressdrucks p2(sp) abhängig von dem Druckwert sp durchgeführt. In diesem Abschnitt des Presszyklus steuert oder regelt die Steuereinrichtung 92 den Druck p2 somit mittels des Druckwerts sp, um eine gewünschte Verengung des Innenform-Membranspalt 65 und Verdichtung oder Vorverdichtung des Pressguts 18 zu steuern.

Fig. 7E zeigt einen vierten zeitlichen Zustand, bei dem zu dem Druck p2 an der Innenform 60 zusätzlich auch ein Druck p1 als Pressdruck an der Außenform 40 angelegt wird. Der Druck p2 an der Innenform 60 ist insbesondere abhängig von dem momentanen Druckwert sp gesteuert. Optional kann der Druck p1 an der Außenform 40 auch früher angelegt werden, als dies bei dem bevorzugt dargestellten zeitlichen Verlauf skizziert ist. Fig. 7F zeigt einen fünften zeitlichen Zustand, bei dem das Pressgut zu einem Pressteil 11 gepresst wurde und nachfolgend der Druck p1, p2 von der Außenform 60 und der Innenform 60 abgenommen wurde. Vor einem Entformen durch Herausbewegen der Innenform 60 aus der Außenform 40 wird bevorzugt der Druck p2(u) als Membran-Ansaugdruck an der Innenform angelegt. Dadurch löst sich die Innenform-Membran 64 nicht nur von dem Pressteil 11, sondern bewegt sich zumindest ein Stück in Richtung des Innenformkerns 66, dass beim nachfolgenden Entformen eine Beschädigung des Pressteils 11 vermieden wird. Insbesondere legt sich die Innenform-Membran 64 am Innenformkern 66 an.

Gemäß einer damit kombinierten oder alternativen Ausgestaltung wird in dem zweiten Verfahrensschritt das Druckmittel in die Innenform 60 eingefüllt und danach das Ventil 96 so eingestellt, dass ein Rückfluss des Druckmittels aus der Innenform 60 in die Drucksteuereinrichtung 85, insbesondere Volumen- und Druck-Steuereinrichtung gesperrt wird.

Insbesondere wird im Fall des gesperrten Ventils 96 der in dem Innenform-Membranspalts 65 herrschende bzw. entstehende Druck p2 nachfolgend abhängig vom an der Außenform 40 anliegenden Druck p1 gebildet.

Insbesondere kann das Ventil 96 für die nachfolgenden Verfahrensschritte des Presszyklus geschlossen bleiben. Bevorzugt wird das Ventil 96 vor dem fünften dargestellten Zustand geöffnet, um den Innenform-Membranspalt 65 reduzieren zu können.

Neben Behältern 11 für Lebensmittel, Suppen oder Getränke können insbesondere auch technische keramische Produkte mit einer solchen Pressenanordnung gepresst werden. Ein Becherabschnitt dient dann ggfs. nicht zur Aufnahme von Lebensmitteln sondern zur Aufnahme anderer Komponenten, Materialien oder ist einfach nur hohl.

Während als konkretes Ausführungsbeispiel als Pressteil ein Becher mit Henkel beschrieben wurde, ist auch eine Herstellung sonstiger keramischer Güter umsetzbar. Dabei sind dann ggfs. vorstehende Begriffe durch äquivalente Begriffe zu ersetzen, wie Becher durch Hohlkörper und Henkel durch seitlichen Ansatz. Solche Pressteile sind insbesondere auch ganz ohne seitliche Ansätze bzw. Henkel formbar. Als Pressteile sind auch anders geformte, insbesondere stärker hintergriffige Pressteile formbar, wie z.B. Hohlwaren in Form bauchiger Tassen oder Suppenschüsseln. Ggfs. sind dann mehr Schlitze oder auch eine mehrteilige Außenform erforderlich.

Insbesondere können die verschiedenen Membranen der einzelnen Komponenten und Materialien von Außenform und Innenform zueinander verschieden sein und zueinander verschiedene Elastizitäten oder Starrheit aufweisen.

Soweit zum Befüllen Unterdruck zur Entlüftung beschrieben wird, kann gemäß anderen Ausgestaltungen auch ein Druckluftbefüllen mit oder ohne anliegendem Unterdruck eingesetzt werden.

Beispielsweise kann ein Pressdruck an nur der Innenform angelegt werden, während die Druckleitung an der Außenform abgesperrt wird.

Auch können einzelne Verfahrensschritte entfallen, wie beispielsweise das Anlegen des Membran-Ansaugdrucks, wenn beispielsweise ein nicht hinterschnittiger Körper zu pressen ist.

Insbesondere wird somit ein isostatisches bzw. quasiisostatisches Pressverfahren bereitgestellt, bei dem zumindest einer von einem an der Außenform 40 und der Innenform 60 anliegenden Druck p1 bzw. p2 gesteuert wird. Insbesondere bei Druck von beiden Seiten auf den Formraum 43 durch die dabei nicht oder nicht vollflächig an den starren Formkörpern anliegenden Membranen 41, 62 wird somit ein isostatisches Pressen ermöglicht, bei dem ein echter allseitiger Druck auf das Pressgut 18 einwirkt.

Vorteilhaft ist eine Ausgestaltung, bei der nach dem Entnehmen der Außenform 40 aus der Pressenanordnung zum Entformen des darin gepressten Pressteils 11 eine andere solche Außenform 60 in die Pressenanordnung eingesetzt wird. Dadurch kann bereits ein weiteres Pressteil 11 in der anderen Außenform hergestellt werden, während das zuvor gepresste Pressteil 11 aus der ersten Außenform 40 entformt wird.

### Bezugszeichenliste:

- 10: Pressenanordnung, insbesondere Behälterpressenanordnung
- 11: Pressteil, insbesondere Hohlkörper oder Behälter
- 12: Hohlkörper, insbesondere Becherabschnitt
- 13: seitlicher Ansatz, insbesondere Henkel
- 14: Ansatzansatz, insbesondere Henkelansatz
- 15: Pressform-Aufnahmekomponente
- 16: Pressform-Aufnahmekomponente
- 17: Pressgutbehälter
- 18: Pressgut
- 20: Pressform
- 21: Außenform-Aufnahmeraum
- 22: erste Pressformkomponente
- 23: zweite Pressformkomponente
- 24: Schließkomponente
- 25: Schließkomponente
- 26: Membran
- 27: Membranbefestigungsmittel
- 28: Druckleitung
- 29: Spalt zwischen Pressformkomponente und Membran
- 30: Aufnahmespalt zwischen Membran und Außenform
- 31: Druckleitung zum Aufnahmespalt
- 32: Füllleitung zum Formraum
- 33: Füllöffnung
- 34: Entlüftungsöffnung/spalt zum Formraum
- 35: Druckleitung zur Entlüftungsöffnung
- 36: Druckleitung zur Innenform oder Innenmembran
- 40: Außenform
- 41: Becher-Membran
- 42: Randabschnitt
- 43: Formraum für Hohlkörper, insbesondere Becher
- 44: Formraum für seitlichen Ansatz, insbesondere Henkel
- 45: Ansatzformabschnitt, insbesondere Henkelformabschnitt
- 46: Formschloss
- 47: ansatz- bzw. henkelseitige Außenwand
- 48: Versteifungs- oder Henkeleinsatz
- 49: Ansatzöffnung, insbesondere Henkelansatzöffnung
- 50: Hohlkörperformabschnitt, insbesondere Becherformabschnitt
- 51: Bodenabschnitt
- 52: oberer Randabschnitt
- 53: Schlitz
- 60: Innenform
- 61: Befestigungsabschnitt
- 62: Umfangswand, insbesondere innenseitige Membran
- 63: oberer Randabschnitt
- 64: Innenform-Membran
- 65: Innenform-Membranspalt
- 66: Innenformkern
- 67: Druckleitung
- 70: Außenform-Herstellungsform
- 71: Seitenteil
- 72: Seitenteil
- 73: oberes Seitenteil
- 74: Kernteil
- 75: Formraum
- 76: Gießöffnung
- 77: Schlitzformteil
- 78: Strukturformelement
- 80: Bodenabschnitt der Innenform-Membran 62
- 81: Umfangsabschnitt der Innenform-Membran 62
- 82: Befestigungseinrichtung für Innenform-Membran 62
- 85: Drucksteuereinrichtung für Druck p2 in Innenform
- 86: Druckleitung zur Innenform
- 87: zweiter Druckkreis, insbesondere Druckzylinder
- 88: erster Druckkreis, insbesondere Druckzylinder
- 89: Verstellkomponente, insbesondere Kolbenstange
- 90: Druckquelle
- 91: Drucksteuerventil
- 92: Steuereinrichtung, insbesondere zentraler Prozessor
- 93: Positions- oder Weg-Aufnehmer, insbesondere Sensor
- 94: Drucksensor
- 95: Unterdruckeinrichtung
- 96: Ventil
- Fs: Schließkräfte
- p: Druck
- p1: Druck, insbesondere Pressdruck auf Außenform
- p2: Druck, insbesondere Pressdruck in Innenform
- p2(sp): Druck in Innenform als Vorverdichtungs- oder Pressdruck
- p2(ss): Druck in Innenform als Membran-Vorformdruck
- p2(u): Druck in Innenform als Membran-Ansaugdruck
- pul: Druck, insbesondere Unterdruck zur Außenform
- pu2: Druck, insbesondere Unterdruck zur Entlüftungsöffnung
- s91: Steuersignal für Innenform-Druckerzeugungseinrichtung
- s95: Steuersignal für Unterdruckeinrichtung
- sp: Druckwert
- ss: Positions- oder Streckenwert
- t: Zeit
- Z: Mittelpunkt von Becherabschnitt der Außenform

## Patentansprüche

1. Pressenanordnung, insbesondere Behälterpressenanordnung (10), zum Pressen eines Pressteils aus einem pulver- und/oder granulatförmigen keramischen Pressgut (18), wobei die Pressenanordnung aufweist
- eine erste Pressformkomponente (22), die eine rückseitig mit Druck (pl) als Pressdruck beaufschlagbare Membran (26) aufweist,
- eine zumindest abschnittsweise elastische Außenform (40), die in der ersten Pressformkomponente (22) einsetzbar oder eingesetzt ist,
- eine zweite Pressformkomponente (23, 60), die als ein Gegenelement zum Ausbilden eines Formraums (43) zwischen einer an der zweiten Pressformkomponente (23) angeordneten Innenform (60) mit einer Innenform-Membran (64) und einem Innenformkern (66) und einem innenseitigen Formabschnitt (50) der Außenform (40) anordbar ist, und
- eine Druckleitung (36) sowie eine Volumen- und/oder Drucksteuereinrichtung (85), die ausgebildet ist zum Einfüllen eines Volumens in die Innenform (60) über die Druckleitung (36) abhängig von
einem Positions- oder Streckenwert (ss) eines Zylinders der Volumen- und/oder Drucksteuereinrichtung (85) zum Ausbilden eines Innenform-Membranspalts (65) zwischen Innenform-Membran (64) und Innenformkern (66).

2. Pressenanordnung nach einem vorstehenden Anspruch, welche eine Druckleitung (24) aufweist, die zum Anlegen eines Unterdrucks (pul) zu einem Aufnahmespalt (30) zwischen der Membran (26) und der darin eingesetzten Außenform (40) führt.

3. Pressenanordnung nach einem vorstehenden Anspruch, bei der die Außenform (40) im eingesetzten Zustand zumindest teilweise an der Membran (26) anliegt, insbesondere ein/der Becherformabschnitt (50) und eine ansatz- oder henkelseitige Außenwand (47) der Außenform (40) außenseitig jeweils zumindest teilweise an der Membran (26) anliegen.

4. Pressenanordnung nach Anspruch 1, welche eine Druckleitung (35) aufweist, die zum Anlegen eines Drucks, insbesondere Unterdrucks (pu2), zu einer Entlüftungsöffnung (34) zu dem Formraum (43) führt, wobei der Druck unabhängig von dem Unterdruck zwischen Membran und Außenform anlegbar ist.

5. Pressenanordnung nach einem vorstehenden Anspruch mit zumindest einer Druckleitung (86, 67) zum Anlegen eines innenseitigen, insbesondere zweiten Drucks (p2) an den zumindest einen Formraum (43, 44), wobei der innenseitige Druck in der Innenform (60) zwischen einer Innenform-Membran (64) und einem Innenformkern (66) anlegbar ist zum Ausbilden eines Innenform-Membranspalts (65).

6. Pressenanordnung nach Anspruch 5, mit einer Volumen- und/oder Drucksteuereinrichtung (85) zum Steuern des Drucks (p2) in der Druckleitung (86, 67) zur Innenform (60), wobei die Volumen- und/oder Drucksteuereinrichtung (85) einen Positions- und/oder Weg-Aufnehmer (93) und einen Drucksensor (94) aufweist und eingerichtet ist, den Druck (p2) abhängig von einem Positions- oder Streckenwert (ss) als Membran-Vorformdruck (p2 (ss)) und abhängig von einem Druckwert (sp) als Pressdruck (p2 (sp)) und/oder als Membran-Ansaugdruck (p2 (u)) zu erzeugen.

7. Pressenanordnung nach einem vorstehenden Anspruch mit einer Entformungseinrichtung (79) zum seitlichen Aufbiegen der Außenform (40) im Bereich eines in die Außenform (40) hineinführenden Schlitzes (53).

8. Pressenanordnung nach einem der Ansprüche 1 bis 7, wobei die Innenform (60) eine elastische Umfangswand (62) - insbesondere eine elastische Membran als Umfangswand (62) - aufweist, welche an einer Druckleitung (36) einer zweiten Pressformkomponente (23) anschließbar ist zum innenseitigen Anlegen eines Drucks (p2), insbesondere Pressdrucks (p2) in der Innenform (60).

9. Pressenanordnung nach Anspruch 8, wobei die Innenform (60) einen Innenformkern (66), einen Bodenabschnitt (80) einer/der Innenform-Membran (62), einen Umfangsabschnitt (81) der Innenform-Membran (62) und eine Befestigungseinrichtung (82) umfasst, wobei die Befestigungseinrichtung (82) den Bodenabschnitt (80) an dem Innenformkern (66) befestigt.

10. Verfahren zum Pressen eines Pressteils (11) aus einem pulver- und/oder granulatförmigen keramischen Pressgut (18) mit einer Pressenanordnung nach einem vorstehenden Anspruch, wobei
- eine zumindest abschnittsweise elastische Außenform (40) in einer unterseitig mit Druck (pl), insbesondere Pressdruck beaufschlagbaren Membran (26) einer ersten Pressformkomponente (22) eingesetzt wird,
- eine zweite Pressformkomponente (23), die als ein Gegenelement zum Ausbilden eines Formraums (43) zwischen einer an der zweiten Pressformkomponente (23) angeordneten Innenform (60) mit einer Innenform-Membran (64) und einem Innenformkern (66) und einem innenseitigen Formabschnitt (50) der Außenform (40) angeordnet wird,
- der zumindest eine Formraum (43, 44) mit dem Pressgut (18) gefüllt wird und
- das Pressgut (18) durch Anlegen zumindest eines isostatischen Drucks (pl, p2) als Pressdruck zu dem Pressteil gepresst wird,
wobei zum Ausbilden eines Innenform-Membranspalts (65) zwischen Innenform-Membran (64) und Innenformkern (66) ein Volumen eines Druckmediums über eine Druckleitung (36) in die Innenform (60) gefüllt wird,
insbesondere das Volumen abhängig von einem Positions- oder Streckenwert (ss) eines Zylinders der Volumen- und/oder Drucksteuereinrichtung (85) in die Innenform (60) gefüllt wird.

11. Verfahren nach Anspruch 10, bei dem zumindest während eines Teils eines Presszyklus ein an der Membran (26) oder der Außenform (40) anliegender Druck (pl), insbesondere Pressdruck zumindest zeitweilig mit unterschiedlichem Druckwert zu einem an der Innenform (60) anliegenden Druck (p2), insbesondere Pressdruck an den zumindest einen Formraum (43, 44) angelegt wird.

12. Verfahren nach einem der Ansprüche 10 bis 11, bei dem unter Ausbildung des Innenform-Membranspalts (65) ein/der Druck (p2) zwischen der Innenform-Membran (64) und dem Innenformkern (66) der Innenform (60) angelegt wird, wobei der Druck (p2) mit zueinander verschiedenen Druckwerten als Membran-Vorformdruck (p2 (ss)) zum Befüllen des Formraums (43, 44) mit dem Pressgut (18) und als Pressdruck (p2 (sp)) zum Pressen des Pressguts (18) angelegt wird.

13. Verfahren nacheinem der Ansprüche 10 bis 12, bei dem ein/der Druck (p2) zwischen der Innenform-Membran (64) und dem Innenformkern (66) der Innenform (60) als Membran- Ansaugdruck (p2 (u)) angelegt wird zum Reduzieren des Innenform-Membranspalts (65).

14. Verfahren nach Anspruch 12 oder 13, bei dem der Druck (p2) abhängig von einem Positions- oder Streckenwert (ss) als Membran-Vorformdruck (p2 (ss)) und abhängig von einem Druckwert (sp) als Pressdruck (p2 (sp)) und/oder als Membran- Ansaugdruck (p2 (u)) angelegt wird.

## Claims

1. Press assembly, in particular container press assembly (10), for pressing a pressed part from a powdery and/or granular ceramic material for pressing (18), wherein the press assembly comprises
- a first press mould component (22) which has a membrane (26) which can be applied with pressure (pl) as a pressing pressure on the rear side,
- an at least sectionally elastic outer mould (40) which can be inserted or is inserted in the first press mould component (22),
- a second press mould component (23, 60) disposable as a mating element for forming a mould space (43) between an inner mould (60) having an inner mould membrane (64) and an inner mould core (66) arranged at the second press mould component (23) and an inside mould portion (50) of the outer mould (40), and
- a pressure line (36) and a volume and/or pressure control means (85) which is designed to fill a volume into the inner mould (60) via the pressure line (36) depending on a position or distance value (ss) of a cylinder of the volume and/or pressure control means (85) for forming an inner mould membrane gap (65) between the inner mould membrane (64) and the inner mould core (66).

2. The press assembly according to a preceding claim, comprising a pressure line (24) leading to a receiving gap (30) between the membrane (26) and the outer mould (40) inserted therein for applying a negative pressure (pul).

3. The press assembly according to a preceding claim, in which the outer mould (40), in the inserted state, at least partially abuts the membrane (26), in particular a/the cup mould portion (50) and an attachment-side or handle-side outer wall (47) of the outer mould (40) each at least partially abuts the membrane (26) on the outside.

4. The press assembly according to claim 1, comprising a pressure line (35) leading to a vent opening (34) to the mould space (43) for applying a pressure, in particular negative pressure (pu2), wherein the pressure can be applied between the membrane and the outer mould independently of the negative pressure.

5. The press assembly according to a preceding claim, having at least one pressure line (86, 67) for applying an internal, in particular second, pressure (p2) to the at least one mould space (43, 44), wherein the internal pressure can be applied in the inner mould (60) between an inner mould membrane (64) and an inner mould core (66) in order to form an inner mould membrane gap (65).

6. The press assembly according to claim 5, having a volume and/or pressure control means (85) for controlling the pressure (p2) in the pressure line (86, 67) to the inner mould (60), the volume and/or pressure control means (85) having a position and/or distance transducer (93) and a pressure sensor (94), and being set up to generate the pressure (p2) as a function of a position or distance value (ss) as a membrane preform pressure (p2 (ss)) and as a function of a pressure value (sp) as a pressing pressure (p2 (sp)) and/or as a membrane suction pressure (p2 (u)).

7. The press assembly according to a preceding claim with a demoulding means (79) for laterally bending up the outer mould (40) in the region of a slot (53) leading into the outer mould (40).

8. The press assembly according to one of claims 1 to 7, wherein the inner mould (60) has an elastic circumferential wall (62) - in particular an elastic membrane as a circumferential wall (62) - which can be connected to a pressure line (36) of a second press mould component (23) for the internal application of a pressure (p2), in particular pressing pressure (p2) in the inner mould (60).

9. The press assembly of claim 8, wherein the inner mould (60) comprises an inner mould core (66), a bottom portion (80) of an/the inner mould membrane (62), a peripheral portion (81) of the inner mould membrane (62), and a fastener (82), the fastener (82) securing the bottom portion (80) to the inner mould core (66).

10. A method for pressing a pressed part (11) from a powdery and/or granular ceramic material for pressing (18) with a press assembly according to a preceding claim, wherein
- an at least sectionally elastic outer mould (40) is inserted in a membrane (26) of a first press mould component (22) to which pressure (pl), in particular pressing pressure, can be applied on the underside,
- a second press mould component (23) arranged as a mating element for forming a mould space (43) between an inner mould (60) having an inner mould membrane (64) and an inner mould core (66) arranged on the second press mould component (23) and an inside mould portion (50) of the outer mould (40),
- the at least one mould space (43, 44) is filled with the material for pressing (18) and
- the material for pressing (18) is pressed to the pressed part by applying at least one isostatic pressure (pl, p2) as pressing pressure,
wherein, in order to form an inner mould membrane gap (65) between the inner mould membrane (64) and the inner mould core (66), a volume of a pressure medium is filled into the inner mould (60) via a pressure line, in particular the volume is filled into the inner mould (60) as a function of a position or distance value (ss) of a cylinder of the volume and/or pressure control means (85).

11. The method according to claim 10, in which, at least during a part of a pressing cycle, a pressure (pl), in particular pressing pressure, applied to the membrane (26) or the outer mould (40) is applied at least temporarily with a different pressure value to a pressure (p2), in particular pressing pressure, applied to the inner mould (60) to the at least one mould space (43, 44).

12. The method according to one of claims 11 to 12, wherein a/the pressure (p2) is applied between the inner mould membrane (64) and the inner mould core (66) of the inner mould (60) to form an inner mould membrane gap (65), wherein the pressure (p2) is applied with mutually different pressure values as a membrane preform pressure (p2 (ss)) for filling the mould space (43, 44) with the material for pressing (18) and as a pressing pressure (p2 (sp)) for pressing the material for pressing (18).

13. The method of one of claims 10 to 12, wherein a/the pressure (p2) between the inner mould membrane (64) and the inner mould core (66) of the inner mould (60) is applied as a membrane suction pressure (p2 (u)) for reducing the inner mould membrane gap (65).

14. The method according to claim 12 or 13, in which the pressure (p2) is applied as a function of a position or distance value (ss) as a membrane preform pressure (p2 (ss)) and as a function of a pressure value (sp) as a pressing pressure (p2 (sp)) and/or as a membrane suction pressure (p2 (u)).

## Revendications

1. Agencement de pressage, en particulier agencement de pressage de récipients (10), pour presser une pièce à presser à partir d'un matériau céramique à presser sous forme de poudre et/ou de granulés (18), l'agencement de pressage présentant :
- un premier composant de moule de pressage (22) qui présente une membrane (26) pouvant être soumise sur sa face arrière à une pression (p1) en tant que pression de pressage,
- un moule extérieur (40), élastique au moins sur certaines parties, qui peut être inséré ou est inséré dans le premier composant de moule de pressage (22),
- un deuxième composant de moule de pressage (23, 60) qui peut être disposé en tant qu'élément complémentaire pour former un espace de moulage (43) entre un moule intérieur (60), qui est disposé sur le deuxième composant de moule de pressage (23) et comporte une membrane de moule intérieur (64) et un noyau de moule intérieur (66), et une partie intérieure de moule (50) du moule extérieur (40), et
- une conduite de pression (36) ainsi qu'un moyen de régulation de volume et/ou de pression (85) qui est conçu pour remplir un volume dans le moule intérieur (60) via la conduite de pression (36) en fonction d'une valeur de position ou de distance (ss) d'un cylindre du moyen de régulation de volume et/ou de pression (85) pour former un interstice de membrane de moule intérieur (65) entre la membrane de moule intérieur (64) et le noyau de moule intérieur (66).

2. Agencement de pressage selon l'une des revendications précédentes, qui présente une conduite de pression (24) qui mène à un interstice de réception (30) entre la membrane (26) et le moule extérieur (40) inséré dans celle-ci pour l'application d'une dépression (pu1).

3. Agencement de pressage selon l'une des revendications précédentes, dans lequel le moule extérieur (40) à l'état inséré s'applique au moins partiellement contre la membrane (26), en particulier une/la partie de moule de gobelet (50) et une paroi extérieure (47) du moule extérieur (40) côté appendice ou anse, s'appliquent chacune au moins partiellement contre la membrane (26) du côté extérieur.

4. Agencement de pressage selon la revendication 1, qui présente une conduite de pression (35) qui mène à une ouverture de purge d'air (34) vers l'espace de moulage (43) pour l'application d'une pression, en particulier d'une dépression (pu2), la pression pouvant être appliquée indépendamment de la dépression entre la membrane et le moule extérieur.

5. Agencement de pressage selon l'une des revendications précédentes, comportant au moins une conduite de pression (86, 67) pour l'application d'une pression intérieure, en particulier d'une deuxième pression (p2), audit au moins un espace de moulage (43, 44), la pression intérieure pouvant être appliquée dans le moule intérieur (60) entre une membrane de moule intérieur (64) et un noyau de moule intérieur (66) pour former un interstice de membrane de moule intérieur (65).

6. Agencement de pressage selon la revendication 5, comportant un moyen de régulation de volume et/ou de pression (85) pour réguler la pression (p2) dans la conduite de pression (86, 67) vers le moule intérieur (60), le moyen de régulation de volume et/ou de pression (85) présentant un capteur de position et/ou de déplacement (93) et un capteur de pression (94) et étant conçu pour générer la pression (p2) en fonction d'une valeur de position ou de distance (ss) en tant que pression de préformage de membrane (p2 (ss)) et en fonction d'une valeur de pression (sp) en tant que pression de pressage (p2 (sp)) et/ou en tant que pression d'aspiration de membrane (p2 (u)).

7. Agencement de pressage selon l'une des revendications précédentes, comportant un moyen de démoulage (79) pour ouvrir latéralement le moule extérieur (40) dans la zone d'une fente (53) conduisant dans le moule extérieur (40).

8. Agencement de pressage selon l'une des revendications 1 à 7, dans lequel le moule intérieur (60) présente une paroi périphérique élastique (62), en particulier une membrane élastique en tant que paroi périphérique (62), qui peut être raccordée à une conduite de pression (36) d'un deuxième composant de moule de pressage (23) pour l'application à l'intérieur d'une pression (p2), en particulier d'une pression de pressage (p2) dans le moule intérieur (60).

9. Agencement de pressage selon la revendication 8, dans lequel le moule intérieur (60) comprend un noyau de moule intérieur (66), une partie inférieure (80) d'une/de la membrane de moule intérieur (62), une partie périphérique (81) de la membrane de moule intérieur (62) et un moyen de fixation (82), le moyen de fixation (82) fixant la partie inférieure (80) au noyau de moule intérieur (66).

10. Procédé pour presser une pièce à presser (11) à partir d'un matériau céramique à presser sous forme de poudre et/ou de granulés (18) avec un agencement de pressage selon l'une des revendications précédentes, dans lequel
- un moule extérieur (40), élastique au moins sur certaines parties, est inséré dans une membrane (26) d'un premier composant de moule de pressage (22) qui peut être soumise sur sa face inférieure à une pression (p1), en particulier une pression de pressage,
- un deuxième composant de moule de pressage (23), qui est disposé en tant qu'élément complémentaire pour former un espace de moulage (43) entre un moule intérieur (60), qui est disposé sur le deuxième composant de moule de pressage (23) et comporte une membrane de moule intérieur (64) et un noyau de moule intérieur (66), et une partie intérieure de moule (50) du moule extérieur (40),
- ledit au moins un espace de moulage (43, 44) est rempli avec le matériau à presser (18), et
- le matériau à presser (18) est pressé pour obtenir la pièce pressée en appliquant au moins une pression isostatique (p1, p2) en tant que pression de pressage, dans lequel, pour former un interstice de membrane de moule intérieur (65) entre la membrane de moule intérieur (64) et le noyau de moule intérieur (66), un volume d'un milieu sous pression est introduit dans le moule intérieur (60) via une conduite de pression (36), en particulier le volume est introduit dans le moule intérieur (60) en fonction d'une valeur de position ou de distance (ss) d'un cylindre du moyen de régulation de volume et/ou de pression (85).

11. Procédé selon la revendication 10, dans lequel au moins pendant une partie d'un cycle de pressage, une pression (p1), en particulier une pression de pressage, appliquée à la membrane (26) ou au moule extérieur (40) est appliquée au moins temporairement avec une valeur de pression différente d'une pression (p2) appliquée au moule intérieur (60), en particulier d'une pression de pressage appliquée audit au moins un espace de moulage (43, 44).

12. Procédé selon l'une des revendications 10 à 11, dans lequel une/la pression (p2) est appliquée entre la membrane de moule intérieur (64) et le noyau de moule intérieur (66) du moule intérieur (60) en formant l'interstice de membrane de moule intérieur (65), la pression (p2) étant appliquée avec des valeurs de pression différentes en tant que pression de préformage de membrane (p2 (ss)) pour remplir l'espace de moulage (43, 44) avec le matériau à presser (18) et en tant que pression de pressage (p2 (sp)) pour presser le matériau à presser (18).

13. Procédé selon l'une des revendications 10 à 12, dans lequel une/la pression (p2) entre la membrane de moule intérieur (64) et le noyau de moule intérieur (66) du moule intérieur (60) est appliquée en tant que pression d'aspiration de membrane (p2 (u)) pour réduire l'interstice de membrane de moule intérieur (65).

14. Procédé selon la revendication 12 ou 13, dans lequel la pression (p2) est appliquée en fonction d'une valeur de position ou de distance (ss) en tant que pression de préformage de membrane (p2 (ss)) et en fonction d'une valeur de pression (sp) en tant que pression de pressage (p2 (sp)) et/ou en tant que pression d'aspiration de membrane (p2 (u)).
